# EUROPÄISCHE PATENTSCHRIFT

(11) **EP 1 481 353 B1**
(45) Veröffentlichungstag und Bekanntmachung des Hinweises auf die Patenterteilung: **26.04.2006**
(21) Anmeldenummer: 03743357.0
(22) Anmeldetag: 28.02.2003
(51) Int. Cl.: G06Q 30/00, H04L 29/06, H04L 29/08

(54) **SYSTEM, VORRICHTUNG UND VERFAHREN ZUR DRAHTLOSEN INTERAKTIVEN KOMMUNIKATION**
SYSTEM, APPARATUS AND METHOD FOR WIRELESS INTERACTIVE COMMUNICATION
SYSTEME, DISPOSITIF ET PROCEDE CONCUS POUR UNE COMMUNICATION INTERACTIVE SANS FIL

(30) Priorität: 01.03.2002 DE 10208847
(43) Veröffentlichungstag der Anmeldung: 01.12.2004
(73) Patentinhaber: Interactive AG, 44809 Bochum (DE)
(72) Erfinder: RICHTER, Wolfgang, 82110 Germering-Harthaus (DE)
(74) Vertreter: Schmidt, Steffen J.
(86) Internationale Anmeldenummer: PCT/EP2003/002077
(87) Internationale Veröffentlichungsnummer: WO 2003/075194

(56) Entgegenhaltungen:
- WO-A-00/22907
- US-A- 5 510 828
- US-A1- 2001 029 478
- US-A1- 2001 034 697
- US-A1- 2001 053 996

## Beschreibung

### Gebiet der Erfindung

Die vorliegende Erfindung betrifft im Allgemeinen Lösungen, die eine Interaktion zwischen einem technischen System und wenigstens einem Benutzer ermöglichen. Insbesondere betrifft die vorliegende Erfindung Lösungen, die es einem oder mehreren Benutzern ermöglichen, mit technischen Systemen, die Informationen über Dienstleistungen oder Waren im Rahmen einer Großveranstaltung oder dergleichen bereitstellen, interaktiv zu kommunizieren, um Dienstleistungen in Anspruch zu nehmen bzw. Waren zu erwerben oder weitere Informationen über diese zu erhalten.

### Hintergrund der Erfindung

Bei Großveranstaltungen, wie z.B. Sportereignissen (Fußballspielen, Motorsportveranstaltungen, Wintersportereignissen, ...) und kulturellen Veranstaltungen (Popkonzerten, Straßenumzügen, Kundgebungen, ...) werden insbesondere von Sponsoren verstärkt Werbemaßnahmen für Dienstleistungen und Produkte durchgeführt. Solche üblicherweise unter Verwendung von Großbildleinwänden, elektronischen Anzeigevorrichtungen, Lautsprechersystemen und Beschallungsanlagen durchgeführte Werbemaßnahmen werden jedoch von Teilnehmern einer Großveranstaltung oftmals nicht oder nur sehr eingeschränkt wahrgenommen und beachtet. Dies ist insbesondere darauf zurückzuführen, dass die Orte, an denen Großveranstaltungen durchgeführt werden, wie z.B. Fußballstadien, Motorsportrennstrecken, öffentliche Plätze und dergleichen, groß- und weitläufig sind und weshalb Werbemaßnahmen üblicherweise an einer oder wenigen einzelnen Stellen stattfinden, z.B. auf einer Großbildleinwand. Dies hat zur Folge, dass Teilnehmer einer Großveranstaltung durch Werbemaßnahmen nicht unmittelbar angesprochen werden, sondern sich der Werbung - im wahrsten Sinn des Wortes - zuwenden müssen, um diese wahrzunehmen. Dies kann beispielsweise dadurch unterstützt werden, dass visuelle Werbemaßnahmen akustisch unterstützt werden und umgekehrt. Dies gewährleistet jedoch nicht, dass so aufmerksam gemachte Teilnehmer einer Großveranstaltung die Werbemaßnahmen tatsächlich wahrnehmen und beachten. Vielmehr werden Werbemaßnahmen bei Großveranstaltungen oftmals als störend empfunden.

Dies stellt für Veranstalter solcher Ereignisse ein besonders in finanzieller Hinsicht bedeutsames Problem dar, da Großveranstaltungen oftmals nur durch finanzielle Unterstützung seitens Sponsoren möglich sind, die als Gegenleistung Werbemaßnahmen für ihre Dienstleistungen oder Waren bei Großveranstaltungen durchführen. Die Bereitschaft möglicher Sponsoren sinkt jedoch, wenn solche Werbemaßnahmen nicht den gewünschten Erfolg haben. Entsprechendes gilt für den Verkauf von Werbeeinheiten ("Werbeminuten") an Anbieter von Dienstleistungen und Waren.

Ein weiteres Problem besteht darin, dass die Attraktivität insbesondere von sportlichen Großveranstaltungen sinkt und damit auch deren Zuschauerzahlen. Um diesem entgegenzuwirken, wäre es erforderlich, Teilnehmern an einer Großveranstaltung neben den eigentlichen Veranstaltungsinhalten weitere Angebote zu machen. Insbesondere sollten solche zusätzlichen Anreize, eine Großveranstaltung zu besuchen, auch den Charakter einer Großveranstaltung aufweisen, um die Erwartungen der Veranstaltungsteilnehmer an eine Großveranstaltung auch in dieser Hinsicht zu erfüllen.

Des weiteren müssen sich solche begleitenden Maßnahmen (Werbung, zusätzliche Veranstaltungsangebote) bei Großveranstaltungen mit den Angeboten und technischen Möglichkeiten moderner Medien und Systeme, wie z.B. dem Internet oder Mobilfunksystemen, messen. Die Möglichkeit, schnell und einfach beispielsweise Werbeinformationen zu erhalten oder an Spielen teilzunehmen, und insbesondere die Möglichkeit, Angebote moderner Medien und Systeme interaktiv zu nutzen und miteinander kombinieren zu können, ist bei Großveranstaltungen bisher nicht gegeben. Dies wird aber oftmals erwartet, weshalb herkömmliche Werbemaßnahmen nicht den gewünschten Erfolg haben, da die Veranstaltungsteilnehmer auf solche "alte" Werbung nicht mehr reagieren. Vielmehr können solche nicht mehr zeitgemäßen Werbemaßnahmen die Attraktivität von Großveranstaltungen und somit deren Teilnehmerzahlen weiter reduzieren. Dies gilt ebenfalls für den Umstand, dass es bisher bei Großveranstaltungen nicht möglich ist, zusätzliche Veranstaltungsangebote, wie z.B. Spiele, zur interaktiven Nutzung durch eine große Anzahl von Teilnehmern bereitzustellen.

Aus der DE 100 53 246 A1 ist ein System bekannt, das auf Durchführung von Auktionen über das Internet beschränkt ist. Teilnehmer benötigen teilweise einen Computer mit Browser. Dieses System ist von der Absicht geprägt, Auktionen durchzuführen. Erfordert zumindest einen Bediener und verwendet Mobiltelefone, was zusätzliche Kosten erzeugt.

Aus der US 2001/0053996 A1 ist ein Medienmanager bekannt Es werden alle verfügbaren Systeme, vom PDA, Notebook und Telefon für die Eingabe verwendet. Dementsprechend groß ist der Aufwand der mit der Teilnehmerzahl überproportional wächst.

Aus der JP 11328290 A ist ein Gebotsmelder für Auktionen bekannt. Ein menschlicher Operator wird vorausgesetzt. Die Gebote werden per Funk abgesandt. Das System ist entweder kollisionsbehaftet, wenn nur ein Kanal verwendet wird, oder die Teilnehmerzahl ist durch die Anzahl der Kanäle beschränkt; jedenfalls ist sie nicht beliebig. Da alle Geräte Sender sind, können keine Referenzen für spätere Verwendung gespeichert werden. Jedes Gerät verbleibt aufgrund seiner festen Zuordnung im Raum und wird erst zu Auktionsbeginn einem Bieter ausgehändigt.

Aus der JP 09198539 A ist ein System bekannt, das nur den schnellsten Bieter berücksichtigt. Das Pollingsystem muss immer alle Geräte abfragen um den schnellsten zu ermitteln, während das erfindungsgemäße Zeitschlitzsystem die Abfrage mit Hilfe der sukzessiven Approximation auf die wesentlichen Teilnehmer reduziert. Die Handgeräte sind zunächst Empfangsgeräte; jedoch haben sie nur eine festgespeicherte ID und den femgesteuerten Timer, eine Referenzspeicherung ist nicht vorgesehen.

Aus der Patentschrift US 5,510,828 ist ein interaktives Video-Anzeigesystem bekannt. Die unter US 2001/0029478 veröffentlichte Patentanmeldung zeigt ein interaktives Wiedergabesystem zur Unterstützung von Online-Auktionen.

### Aufgabe der Erfindung

Aufgabe der vorliegenden Erfindung ist es, im Allgemeinen die oben genannten Probleme bei Großveranstaltungen zu lösen. Insbesondere soll es die vorliegende Erfindung ermöglichen, bei einer Großveranstaltung neben deren eigentlichen Veranstaltungsangeboten weitere Angebote und insbesondere solche bereitzustellen, die eine interaktive Beteiligung durch Veranstaltungsteilnehmer erlauben.

Zur Lösung dieser Aufgabe stellt die vorliegende Erfindung Vorrichtungen und Verfahren zur interaktiven Kommunikation im Rahmen einer Großveranstaltung gemäß den unabhängigen Ansprüchen 1, 12 bis 14, sowie 22 bereit.

### Erfindungsgemäße Lösung

Ein einkanaliger Sender mit geringer Sendeleistung (z.B. 10 mW) sendet zu einem beliebigen Ereignis eine Referenznummer innerhalb weniger Millisekunden aus. Diese wird von einer beliebigen Anzahl von Teilnehmern, die mit Empfangsgeräten ausgestattet sind, gleichzeitig empfangen. Der Empfang einer solchen Referenznummer wird durch das Empfangsgerät signalisiert, beispielsweise durch eine LED und/oder eine Vibration. Jedes Empfangsgerät besitzt einen Knopf, der bei Betätigung die empfangene Referenznummer in einen Speicher überträgt. Außerdem weist jedes Empfangsgerät eine eindeutige Identifizierungsnummer (ID) auf. Durch Aussenden einer solchen ID kann der betreffende Empfänger vom Sender direkt einzeln angesprochen werden. Der ID kann eine Anweisung folgen, die beispielsweise geeignet ist, den Empfänger zu veranlassen, die gespeicherte(n) Referenznummer(n) an ein diese verarbeitendes System zu übertragen. Diese Übertragung kann auf unterschiedliche Weise erfolgen. Ein im Empfangsgerät vorhandener Timer kann feststellen, wie viel Zeit nach dem Empfang der Referenznummer bis zu einem evtl. Tastendruck vergangen ist. Außerdem kann der zeitliche Verbleib einer nichtgespeicherten Referenznummer im Empfangsgerät durch den Sender bestimmt werden, sie wird aber spätestens beim Aussenden einer weiteren Referenznummer automatisch gelöscht.

Das erfindungsgemäße System umfasst ein lokales Rechnersystem, das mittels einer Sendereinheit und einer Empfängereinheit im Bereich der Großveranstaltung drahtlos Signale senden und empfangen kann.

Zur Wiedergabe von Informationen, beispielsweise in Form von Werbung, Spiel- oder Wettangeboten und dergleichen, wird eine Wiedergabeeinheit zur Wiedergabe von Informationen im Bereich der Großveranstaltung verwendet.

Um an einer interaktiven Kommunikation mittels des erfindungsgemäßen Systems teilzunehmen, sind Endbenutzergeräte vorgesehen, die jeweils eine Sende- und Empfangseinheit aufweisen, um Signale von dem lokalen Rechnersystem zu empfangen und zu diesem zu übertragen.

Zur interaktiven Kommunikation mit den Endbenutzergeräten sendet das lokale Rechnersystem in Abhängigkeit von mit der Wiedergabeeinheit wiedergegebenen Informationen Signale an die Endbenutzergeräte, die wenigstens ein Endbenutzergerät steuern.

Auf diese Weise wird es möglich, beispielsweise bei einer im Rahmen einer Großveranstaltung durchgeführten Werbemaßnahme nicht nur Werbeinformationen bereitzustellen, sondern über die Endbenutzergeräte einzelne oder mehrere Besucher der Großveranstaltung anzusprechen.

In Ergänzung zu der Wiedergabeeinheit ist es vorgesehen, dass die Endbenutzergeräte Wiedergabeeinrichtungen, wie z.B. farbige Leuchtanzeigen, miniaturisierte Displays, Lautsprecher, Spracherzeugungseinrichtungen und dergleichen, aufweisen, um in Abhängigkeit von Signalen des lokalen Rechnersystems Informationen wiederzugeben.

Um einem Benutzer eines Endbenutzergerätes eine aktive interaktive Kommunikation im Rahmen der Großveranstaltung zu ermöglichen, kann jedes Endbenutzergerät eine Eingabevorrichtung aufweisen. Mittels der Eingabeeinrichtung kann der Benutzer Daten in das Endbenutzergerät in Abhängigkeit bzw. in Antwort auf mittels der Wiedergabeeinheit und/oder der entsprechenden Wiedergabeeinrichtung wiedergegebene Informationen eingeben. Für eine einfache Bedienung der Endbenutzergeräte sind insbesondere Eingabevorrichtungen in Form von durch Benutzer betätigbaren Tastern, Druckschaltern, berührempfindlichen Eingabekomponenten und dergleichen vorgesehen.

Vorzugsweise weisen die Endbenutzergeräte Speichereinrichtungen auf, um wenigstens teilweise Signale des lokalen Rechnersystems und/oder von einem Benutzer eingegebene Daten zu speichern. Die gespeicherten Daten können dann, beispielsweise unter Steuerung von Signalen des lokalen Rechnersystems, wenigstens teilweise zu dem lokalen Rechnersystem übertragen werden. Hierbei können auch Daten übertragen werden, die bereits in den Endbenutzergeräten vorliegen, wie z.B. Endbenutzergeräte kennzeichnende Identifizierungsdaten.

Um zusätzliche Datenübertragungen zwischen dem lokalen Rechnersystem und den Endbenutzergeräten zu ermöglichen, kann eine dem lokalen Rechnersystem zugeordnete Schnittstelleneinheit verwendet werden. Die Schnittstelleneinheit dient zur Signalübertragung zwischen dem lokalen Rechnersystem und einem Endbenutzergerät, das mit der Schnittstelleneinheit (kapazitiv, induktiv, ...) gekoppelt oder, beispielsweise durch eine Signalleitung, verbunden ist. Um Daten solcher Endbenutzergeräte über die Schnittstelleneinheit zu dem lokalen Rechnersystem zu übertragen, ist es vorgesehen, dass das lokale Rechnersystem entsprechende Steuersignale über die Sendereinheit und/oder die Schnittstelleneinheit zu den entsprechenden Endbenutzergeräten überträgt.

Zum Aufbau einer vernetzten Anordnung kann ein zentrales Rechnersystem verwendet werden, das über ein Netzwerk zur Datenübertragung mit dem lokalen Rechnersystem verbunden ist. Insbesondere werden von dem zentralen Rechnersystem Daten zu dem lokalen Rechnersystem übertragen, die Informationen angeben, die mittels der Wiedergabeeinheit wiedergegeben werden sollen.

Zur Speicherung von Daten und/oder Informationen, die zum Betrieb einzelner oder mehrerer Komponenten des Systems bzw. des Systems selbst verwendet werden, wird wenigstens eine Datenbasis eingesetzt, die dem lokalen Rechnersystem und/oder dem zentralen Rechnersystem zugeordnet sein kann.

Vorzugsweise werden die Signale bei der drahtlosen Signalübertragung bei einer vorbestimmten Frequenz übertragen. Dies hat den Vorteil, dass sowohl das lokale Rechnersystem als auch die Endbenutzergeräte lediglich zum Senden und Empfangen von Signalen der vorbestimmten Frequenz auszulegen sind.

Damit Benutzer von Endbenutzergeräten Daten und/oder Informationen, die im Zusammenhang mit mittels der Wiedergabeeinheit und/oder der entsprechenden Wiedergabeeinrichtung wiedergegebene Informationen stehen, erhalten kann, beispielsweise nach Verlassen der Großveranstaltung oder unabhängig von dem Endbenutzergerät, ist es vorgesehen, dass das lokale Rechnersystem in Abhängigkeit von Daten des entsprechenden Endbenutzergerätes Daten zu einem anderen System zu übertragen, das dem Benutzer solche Daten bereitstellen kann. In Abhängigkeit von den Daten des lokalen Rechnersystems kann dann das andere System, beispielsweise ein Postversanddienst, ein SMS-Rechnersystem, ein E-mail-System, eine Telefonzentrale und dergleichen Daten und/oder Informationen dem Benutzer, insbesondere unabhängig von dem Endbenutzergerät, bereitstellen, beispielsweise über dessen privates Rechnersystem oder Mobiltelefon.

Insbesondere zur Kommunikation mit anderen Rechnersystemen ist es vorgesehen, dass das zentrale Rechnersystem so betrieben wird, dass es für andere Rechnersysteme als Rechnersystem eines Benutzers eines Endbenutzergerätes erscheint, d.h. als virtueller Benutzer arbeitet. Hierfür werden dem zentralen Rechnersystem beispielsweise durch das lokale Rechnersystem, Daten eines Endbenutzergerätes bereitgestellt, in Abhängigkeit von denen das zentrale Rechnersystem wie ein dem entsprechenden Benutzer des Endbenutzergerätes zugeordnetes Rechnersystem arbeitet.

Um beispielsweise Anbietern von Waren und Dienstleistungen eine einfache Nutzung des erfindungsgemäßen Systems zu ermöglichen, kann das lokale Rechnersystem und/oder das zentrale Rechnersystem mittels eines Rechnersystems eines Anbieters kontaktiert werden, um Daten bereitzustellen, um wenigstens mittels der Wiedergabeeinheit wiederzugebende Informationen, z.B. beispielsweise in Form von Werbung, zu definieren. Hierfür können durch das lokale und/oder zentrale Rechnersystem bereitgestellte Intemetseiten, sogenannte Web-Pages verwendet werden. Ferner können von dem Anbieter, der das erfindungsgemäße System nutzen möchte, auch Daten und/oder Informationen bereitgestellt werden, die angeben, wie weitergehende Informationen über seine Produkte oder Dienstleistungen erhalten werden können und wie ein Benutzer eines Endbenutzergerätes Produkte kaufen bzw. Dienstleistungen in Anspruch nehmen kann. Des weiteren kann der Anbieter wenigstens teilweise vorgeben, wie eine interaktive Kommunikation bei der Großveranstaltung ablaufen soll.

Außerdem stellt die vorliegende Erfindung zur Lösung der oben genannten Aufgabe Endbenutzergeräte und Rechnersysteme zur Verwendung mit dem zuvor beschriebenen erfindungsgemäßen System sowie entsprechende Verfahren bereit.

Referenznummern können digital oder analog von einem Sender optisch, akustisch, per Funk oder auf andere Weise abgestrahlt werden. Im Empfangsbereich dieser Nachricht kann sich eine beliebige Anzahl vom Empfangsgeräten befinden. Eine vom Sender ausgestrahlte Referenznummer wird vom (hier Funk-) Empfänger jedes Empfangsgerätes empfangen und in einem Empfangsregister abgelegt. Dies wird signalisiert, beispielsweise durch eine LED. Parallel zu diesem Ereignis findet eine Darbietung statt. Dies kann z.B. durch ein Medium (Film, Ton, Musik) oder real (Auftritte von Personen und Gegenständen) erfolgen. Innerhalb einer solchen Darbietung wird kund getan, was die Betätigung des Speicherknopfes bedeutet.

Dies kann beispielsweise die Äußerung eines Kaufwunsches (Bestellung) sein. Auf jeden Fall signalisiert ein Knopfdruck eine Bestätigung des jeweiligen Teilnehmers, dem dargebotenen Thema entsprechend. Daraus ergibt sich eine universelle Verwendungsmöglichkeit für das System, das vom Content unabhängig ist. Lediglich die Referenznummer, die deshalb von besonderer Bedeutung ist, in Verbindung mit der (anonymen) Teilnehmer-Identifikationsnummer des Empfangsgerätes stellt eine Relation zu der Darbietung her. Dabei ist besonders vorteilhaft, das jede Darbietung ohne nennenswerten Aufwand mit einem interaktiven Gruppenereignis versehen werden kann, nämlich dergestalt, das zu dem Ereignis ein dieses referenzierendes Signal ausgesandt wird. Die Abfrage der gespeicherten Referenznummem kann unmittelbar oder später am gleichen oder später an einem anderen Ort erfolgen. Damit ist der Zweck verbunden, den Teilnehmer dazu zu bewegen, einen bestimmten Ort (Verkaufstelle, Reisebüro, Veranstaltungsort usw.) persönlich aufzusuchen. Bei einem begrenzten Angebot und/oder einem variablen Preis eines Produktes, Spielgewinns oder einer Dienstleistung innerhalb einer Darbietung kann es notwendig sein, zu ermitteln, welche(r) Teilnehmer zuerst oder zuletzt auf das referenzierte Angebot reagierte(n). Dazu kann im Empfangsgerät ein Timeslot-Zähler (Timer) direkt nach dem Empfang einer Referenznummer gestartet werden. Je kleiner diese aufeinanderfolgenden Zeitschlitze sind, desto kleiner ist nach der Wahrscheinlichkeit die Anzahl der Teilnehmer, die innerhalb einer betreffenden Zeitspanne den Speicherknopf betätigten. Sukzessive Approximation kann relativ schnell den oder die Teilnehmer feststellen, der oder die im richtigen Zeitbereich reagierte(n). Um "Frühstarts" auszuschließen, kann ein Teilnehmer, der vor dem Aufleuchten der LED den Knopf betätigt, bis zur Freigabe automatisch für die betreffende(n) Referenznummern gesperrt werden, d.h. er kann diese nicht in seinen Speicher überführen.

### Kurzbeschreibung der Figuren

Bei der Beschreibung bevorzugter Ausführungsformen wird auf die beigefügten Darstellungen Bezug genommen, von denen zeigen:
Fig. 1 Eine schematische Darstellung einer Ausführungsform eines erfindungsgemäßen Systems,
Fig. 2 eine schematische Darstellung einer vernetzten Ausführungsform eines erfindungsgemäßen Systems,
Fig. 3 eine schematische Darstellung von Funktionsblöcken eines erfindungsgemäßen Endbenutzergeräts,
Fig. 4 eine schematische Darstellung eines Ablaufschemas bei Verwendung der Systeme von Fig. 1 und 2, und
Fig. 5 eine schematische Darstellung einer weiteren vernetzten Ausführungsform eines erfindungsgemäßen Systems.

### Beschreibung bevorzugter Ausführungsformen

Im Folgenden werden bevorzugte Ausführungsformen eines Systems zur interaktiven Kommunikation bei einer Großveranstaltung, z.B. einem Fußballspiel, beschrieben.

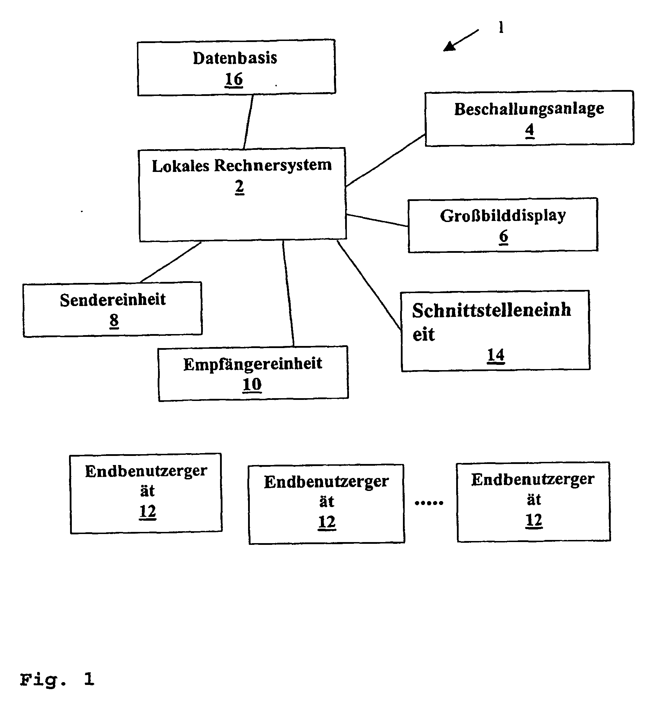

Fig. 1 stellt eine Ausführungsform eines Systems 1 zur interaktiven Kommunikation für Besucher eines Fußballstadions (nicht dargestellt) schematisch dar. Das System 1 umfasst ein Rechnersystem 2, das mit einer Beschallungsanlage 4 und einer großflächigen Anzeigevorrichtung 6 (im Folgenden Großbilddisplay) des Fußballstadions verbunden ist. Neben der Im Folgenden beschriebenen Steuerung der Beschallungsanlage 4 und des Großbilddisplays 6 durch das Rechnersystem 2 können die Beschallungsanlage 4 und das Display 6 auch für weitere, herkömmliche Audio- und Videowiedergaben verwendet werden, wie z.B. eine Anzeige des Spielstandes oder akustische Mitteilungen an die Stadionbesucher. Ein solcher Betrieb der Beschallungsanlage 4 und des Großbilddisplays 6 kann durch das Rechnersystem 2 oder durch schon vorhandene, entsprechende Steuerungen erfolgen.

Ferner ist das Rechnersystem 2 mit einer Sendereinheit 8 und einer Empfängereinheit 10 verbunden, um Daten und/oder Informationen wiedergebende Signale in dem Fußballstadion auszusenden und zu empfangen. Die Sendereinheit 8 und die Empfängereinheit 10 können eine integrierte Einheit darstellen. Ferner ist es vorgesehen, dass die Sendereinheit 8 und die Empfängereinheit 10 jeweils einen oder mehrere Sender bzw. Empfänger (nicht dargestellt) umfassen, um Signale in den Bereichen des Stadions aussenden und empfangen zu können, in denen die durch das System 1 bereitgestellte interaktive Kommunikation genutzt werden soll.

In dem Stadion übertragene Signale sind vorteilhafterweise Funksignale, die in gesetzlich freigegebenen Funkfrequenzbereichen übertragen werden. Dies hat den Vorteil, dass das System 1 ohne aufwendige Genehmigungsverfahren installiert werden kann, wobei neben den gesetzlichen auch gesundheitliche Anforderungen erfüllt werden sollten.

Zur Nutzung der durch das System 1 bereitgestellten interaktiven Kommunikationsmöglichkeit, werden als IMECO (interactiv media communicator) bezeichnete Endbenutzergeräte 12 verwendet. Die Endbenutzergeräte 12, deren Aufbau und Funktion Im Folgenden detaillierter beschrieben wird, erlauben es ihren Benutzern, d.h. den entsprechenden Stadionbesuchem, von der Sendereinheit 8 ausgesendete Signale zu empfangen und in Antwort darauf oder unabhängig davon Signale zu der Empfängereinheit 10 zu senden.

Des weiteren kann das System 1 eine Schnittstelleneinheit 14 umfassen, die, vergleichbar zu einer Kommunikation über die Sender- und Empfängereinheiten 8 und 10, zur Kommunikation zwischen dem Rechnersystem 2 und den Endbenutzergeräten 12 dient. Die Schnittstelleneinheit 14 kann in Abhängigkeit davon, ob und wo in dem Stadion eine Kommunikation zwischen dem Rechnersystem 2 und Endbenutzergeräten 12 über die Schnittstelleneinheit 14 folgen soll, eine oder mehrere, vorteilhafterweise an unterschiedlichen Standorten angeordnete Schnittstellen (nicht bezeichnet) aufweisen. Im Gegensatz zu der oben beschriebenen funksignalbasierten Kommunikation mit dem Rechnersystem 2 verwendet die Schnittstelleneinheit 14 andere Übertragungsformen.

Geeignete Beispiele hierfür sind induktive und/oder kapazitive Kopplungen zwischen der Schnittstelleneinheit 14 bzw. einer ihrer Schnittstellen mit einem Endbenutzergerät 12, Infrarot- und/oder Ultraschallübertragungsstrecken, mittels Steckverbindungen herstellbare verdrahtete Kommunikationswege und dergleichen.

Eine dem Rechnersystem 2 zugeordnete Datenbasis 16 dient zur Speicherung von Daten und Informationen zum Betrieb des Systems 1. Beispiele hierfür umfassen Audiodaten zur Wiedergabe durch die Beschallungsanlage 4, Videodaten zur Wiedergabe durch das Großbilddisplay 6, Daten zur Identifizierung von Endbenutzergeräten 12, persönliche Daten von Benutzern der Endbenutzergeräte 12, Softwareprogramme zum Betrieb des Rechnersystems 2 und von den damit verbundenen Komponenten, Softwareprogramme zur Auswertung von von Endbenutzergeräten 12 erhaltenen Daten und dergleichen.

Wenn das in Fig. 1 dargestellte System als lokale Lösung, d.h. auf das Stadion beschränkte Lösung verwendet wird, ist es vorgesehen, dass Daten zum Betrieb des Systems 1 in der Datenbasis 16 vorliegen. Zur Speicherung von Daten in der Datenbasis 16 können portable Speichermedien, Netzwerkverbindungen, beispielsweise über das Internet, und manuelle Dateneingaben verwendet werden. Ferner ist es vorgesehen, den Endbenutzergeräten 12 zugeordnete Daten (z.B. Identifizierungsnummern) von diesen an die Datenbasis 16 zu übertragen. Dies kann beispielsweise über die Schnittstelleneinheit 14 oder die Empfangseinheit 10 erfolgen, um z.B. beim Betreten des Stadions Endbenutzergeräte 12 zu registrieren.

Auf der Grundlage des in Fig. 1 dargestellten Systems 1 kann auch eine vernetzte Anordnung solcher Systeme aufgebaut werden, wobei Daten der Datenbasis 16 zwischen den einzelnen Systemen über ein Computemetzwerk oder ein Telefonnetz ausgetauscht und abgeglichen werden können. Dies vereinfacht den Betrieb der einzelnen, vernetzten Systeme, lässt aber weiterhin einen lokalen, beispielsweise auf das Stadion beschränkten Betrieb, unabhängig von den anderen Systemen zu.

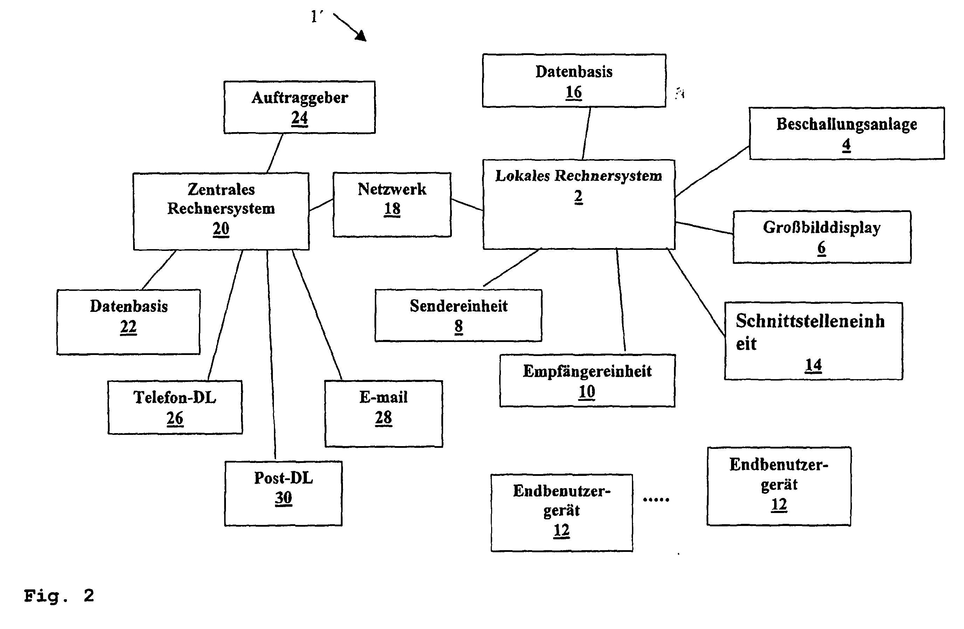

Eine weitere vernetzte Ausführung kann durch das in Fig. 2 schematisch dargestellte System 1' erreicht werden. Das System 1' umfasst wenigstens ein lokales System 1 von Fig. 1, das über ein Netzwerk 18 mit einem zentralen Rechnersystem 20 kommunizieren kann. Insbesondere können zwischen dem zentralen Rechnersystem 20 und dem im Folgenden als lokales Rechnersystem bezeichneten Rechnersystem 2 Daten und Informationen ausgetauscht werden, wobei das Netzwerk 18 ein einzelnes Netzwerk, beispielsweise ein Computemetzwerk (Internet) oder ein Telefonnetzwerk sein oder mehrere Netzwerke umfassen kann.

Dem zentralen Rechnersystem 20 ist eine zentrale Datenbasis 22 zugeordnet, die neben Daten, wie sie oben unter Bezug auf die lokale Datenbasis 16 beschrieben wurden, weitere Daten umfassen kann. Beispiele hierfür sind Daten zum Betrieb des zentralen Rechnersystems 20 (Softwareprogramme), personenbezogene Daten von Benutzern von Endbenutzergeräten 12 (Adressen, Bankverbindungen, Telefonnummern, ...), Daten, die Dritte (z.B. Anbieter von Waren oder Dienstleistungen) betreffen, die das System 1' nutzen möchten (z.B. zur Durchführung von Werbemaßnahmen, interaktiven Spielen, Wetten, Auktionen, etc.), Daten und Softwareprogramme zur Kommunikation mit und zur Steuerung von weiteren Rechnersystemen (z.B. Rechnersysteme von Tele-fon-, E-mail- und Postdienstleistern) und dergleichen.

Bei Verwendung des Systems 1' mit mehreren lokalen Systemen 1 ermöglicht es das zentrale Rechnersystem 20, Daten zum Betrieb der lokalen Systeme 1 und insbesondere den Endbenutzergeräten 12 zugeordnete Daten zentral zu verwalten und zu verwenden. Ferner können mehrere lokale Systeme 1 unter Steuerung des zentralen Rechnungssystems 20 in gleicher Weise betrieben werden, d.h. die betreffenden lokalen Rechnersysteme 1 stellen die gleichen akustischen und visuellen Informationen und die gleichen entsprechenden Interaktionsmöglichkeiten bereit. Ein solcher gleichartiger Betrieb mehrerer lokaler Rechnersysteme 1 kann auch zeitlich parallel erfolgen, um beispielsweise in der Halbzeitpause von Fußballspielen einer nationalen Liga, die im Allgemeinen wenigstens teilweise zeitlich überschneidend stattfinden, allen Besuchern der verschiedenen Fußballstadien die gleiche interaktiv nutzbare Werbung oder Spiele bereitzustellen.

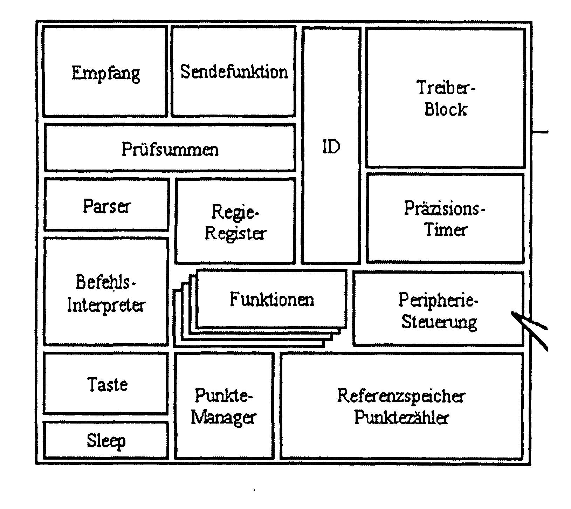

Bezugnehmend auf Fig. 3 wird der funktionelle Aufbau der Endbenutzergeräte 12 erläutert. Die Endbenutzergeräte 12 können als einzelne Vorrichtungen ausgeführt sein, beispielsweise als Schlüsselanhänger, Werbefigur und dergleichen. Des weiteren ist vorgesehen, dass die Endbenutzergeräte 12 baueinheitlich in andere Vorrichtungen integriert sind, wie z.B. tragbare Audio- und/oder Videogeräte, Armbanduhren, portable Rechnersysteme, Mobiltelefone etc. Außerdem können die Endbenutzergeräte 12, genauer deren Funktionen, wenigstens teilweise durch Vorrichtungen bereitgestellt werden, die so betrieben werden können, dass sie als Endbenutzergeräte 12 arbeiten. Ein solcher Betrieb kann beispielsweise durch entsprechende Softwaremodifikationen oder -ergänzungen solcher Vorrichtungen erreicht werden. Beispiele für solche Vorrichtungen umfassen mobile Telefone, portable Rechnersysteme, elektronische Audio- und/oder Videogeräte etc., wobei es teilweise erforderlich sein kann, Komponenten zu ergänzen, um Funktionen der Endbenutzergeräte bereitzustellen, die durch die Vorrichtung selbst nicht bereitgestellt werden kann. Dies betrifft insbesondere den Empfang und die Übertragung von Daten, Informationen und/oder Signalen zu der Sendereinheit 8, der Empfängereinheit 10 und der Schnittstelleneinheit 14 des Systems 1, wobei es erforderlich sein kann, Übertragungseinrichtungen (Sende- und/oder Empfängseinrichtungen) zu ergänzen. Dies kann beispielsweise im Falle eines tragbaren Rechnersystems mittels eines damit verbindbaren Moduls, beispielsweise einer PCMCIA-Karte erfolgen.

Der Einfachheit halber wird Im Folgenden davon ausgegangen, dass das Endbenutzergerät 12 als eigenständige Vorrichtung in einem handlichen Gehäuse untergebracht ist, dass, vergleichbar zu einer Verkehrsampel, drei Leuchtanzeigen für rote, gelbe und grüne Signale, die sprachunabhängig sind und nahezu weltweit verstanden werden, und einen Bedienknopf aufweist. Ferner umfasst das Endbenutzergerät 12 einen Funktransceiver. Vorteilhafterweise arbeitet der Funktransceiver für alle Endbenutzergeräte 12 des Gesamtsystems 1' oder für einzelne oder mehrere lokale Systeme 1 auf der gleichen Frequenz, wodurch zumindest der Aufbau einzelner lokaler Systeme vereinfacht wird. Die Vereinfachung besteht insbesondere darin, dass die Sendereinheiten 8 und die Empfängereinheiten 10 von lokalen Systemen 1, die Endbenutzergeräte 12 mit gleicher Frequenz versorgen, lediglich zum Betrieb mit der speziellen Frequenz ausgelegt sein müssen.

Zur Kommunikation mit einem lokalen Rechnersystem 2 über dessen Schnittstelleneinheit 14 weist das Endbenutzergerät 12, falls eine derartige Kommunikation vorgesehen ist, entsprechende Komponenten auf, die einzelne oder mehrere der oben unter Bezugnahme auf die Schnittstelleneinheit 14 genannten Übertragungswege unterstützt.

Des weiteren weist das Endbenutzergerät 12 eine Steuereinrichtung oder einen Controller auf, der von einem lokalen Rechnersystem 2 empfangene Daten und/oder Informationen verarbeitet (interpretiert), speichert und entsprechende Funktionen des Endbenutzergerätes 12 steuert. Ein zur Speicherung solcher Daten und/oder Informationen verwendeter Speicherbereich kann auch zur Speicherung einer das jeweilige Endbenutzergerät 12 identifizierenden Nummer dienen. Eine solche Identifizierungsnummer für ein Endbenutzergerät 12 kann in dem Speicherbereich dauerhaft, löschbar oder in einer Weise gespeichert sein, die eine Modifizierung, vorteilhafterweise durch den Betreiber eines lokalen Rechnersystems 2 und/oder des zentralen Rechnersystems 20 zur Vermeidung missbräuchlicher Änderungen solcher Nummern, erlaubt. Alternativ kann die Identifizierungsnummer eines Endbenutzergerätes 12 in einer separaten Speichereinrichtung vorliegen, beispielsweise in einem EPROM oder EEPROM.

Um einem Benutzer eines Endbenutzergerätes 12 alternativ oder optional zu der Verwendung einer entsprechenden Beschallungsanlage 4 akustische Informationen bereitzustellen, kann das Endbenutzergerät 12 eine Sprachausgabe aufweisen, die in Abhängigkeit des Betriebs des jeweiligen lokalen Systems 1 und/oder des Endbenutzergerätes 12 akustische Signale ausgibt, beispielsweise in Form einer Sprachausgabe. Jeweils ist vorgesehen, dass eine Sprachausgabe benutzerspezifisch oder in Abhängigkeit des lokalen Systems erfolgt, indem das Endbenutzergerät 12 benutzt wird. Dies erlaubt es beispielsweise, eine Sprachausgabe mit einer von dem Benutzer gewünschten Stimme einer bekannten Person oder in Abhängigkeit davon vorzunehmen, ob das Endbenutzergerät 12 in einem Fußballstadion oder bei einem Popkonzert verwendet wird.

Wie oben ausgeführt, sollen mit Hilfe der lokalen Systeme 1 bzw. des Gesamtsystems 1' interaktive Kommunikationsmöglichkeiten eröffnet werden, die dem Charakter einer Großveranstaltung Rechnung tragen. Dem entsprechend stellen die Großbilddisplays 6 bzw. damit vergleichbare Vorrichtungen die wesentlichen Mittel dar, um Benutzern von Endbenutzergeräten 12 visuelle Informationen zur Verfügung zu stellen. Ungeachtet dessen kann es vorteilhaft sein, wenn die Endbenutzergeräte 12 visuelle Anzeigeeinrichtungen (z.B. LCD-Displays) aufweisen, die z.B. visuelle Informationen auch an Standorten verfügbar zu machen, von denen aus das entsprechende Großbilddisplay 6 nicht eingesehen werden kann. Außerdem erlaubt die Verwendung solcher Endbenutzergeräte 12 die Verteilung zusätzlicher visueller Informationen, die beispielsweise benutzer- oder benutzergruppenspezifisch verwendet werden.

Mittels einer Einheit, die Vibrationen oder vergleichbare Bewegungen eines Endbenutzergerätes 12 verursachen kann, ist es möglich, die Teilnahme an einer interaktiven Kommunikation "spürbar" zu unterstützen oder einen Benutzer daran zu erinnern, sein Endbenutzergerät 12 zu benutzen.

Zur Steuerung des Endbenutzergerätes 12 ist der oben genannte Bedienknopf vorgesehen. Das Endbenutzergerät 12 befindet sich vor einer aktiven Verwendung seitens eines Benutzers in einem, vorteilhafterweise stromlosen, Ruhezustand, der auch als Stand-by-Modus oder Schlafmodus bezeichnet wird. Zur Aktivierung des Endbenutzergerätes 12 wird der Bedienknopf betätigt, um das Endbenutzergerät 12 aus dem Ruhezustand in einen betriebsbereiten bzw. betriebsfähigen Zustand zu bringen, d.h. aufzuwecken. Das Endbenutzergerät 12 kann danach so betrieben werden, dass eine Betätigung des Bedienknopfes nur zu bestimmten Zeitpunkten ausgewertet wird, um den Betrieb des Endbenutzergeräts 12 zu steuern bzw. mit einem entsprechenden lokalen System 1 oder einem System 1' interaktiv zu kommunizieren. Ferner ist ein Betrieb des Endbenutzergeräts 12 möglich, bei dem der Bedienknopf nur zu bestimmten Zeitpunkten betätigt werden darf. In beiden Fällen kann hierfür ein, vorteilhafterweise durch ein lokales Rechnersystem 2 oder ein zentrales Rechnersystem 20 steuerbarer, Zeitgeber verwendet werden. In Verbindung mit den oben genannten drei Leuchtanzeigen kann dann einem Benutzer des Endbenutzergerätes 12 signalisiert werden, wann bzw. wie lange eine Betätigung des Bedienknopfes ausgewertet wird und/oder zugelassen ist. Wenn beispielsweise die Leuchtanzeige "grün" aktiviert ist, wird der Zeitgeber gestartet, wobei nach Ablauf einer durch diesen vorgegebenen Zeitdauer die Leuchtanzeige "rot" aktiviert wird, um dem Benutzer des Endbenutzergerätes 12 anzuzeigen, dass eine Betätigung des Bedienknopfes nicht mehr ausgewertet wird oder zulässig ist. Hierbei kann die Leuchtanzeige "gelb" verwendet werden, um das Erreichen der durch den Zeitgeber vorgegebenen Zeitgrenze frühzeitig anzuzeigen. Ferner kann der Zeitgeber oder ein weiterer Zeitgeber (Reaktionstimer) verwendet werden, um nach einer Aktivierung der Leuchtanzeige "grün" die Zeitdauer zu ermitteln, die danach bis zu einer Betätigung des Bedienknopfes verstreicht.

Am Veranstaltungsort (z.B. dem obigen Fußballstadion) kann das lokale Rechnersystem 2 unter Verwendung seiner Sendereinheit 8 die vom Funkbereich erfassten Endbenutzergeräte 12 auf verschiedene Weisen ansprechen.

In einem sogenannten Radio-Mode werden an die Endbenutzergeräte 12 beispielsweise Steuerbefehle wiedergebende Signale gesendet, auf die alle Endbenutzergeräte 12 gleich reagieren.

Um einzelne oder mehrere, beispielsweise unterschiedlichen Gruppen zugeordnete, Endbenutzergeräte 12 anzusprechen, wird ein sogenannter Only-Mode verwendet. Hierbei sendet das lokale Rechnersystem 2 an alle Endbenutzergeräte 12 Signale, die wenigstens die Identifizierungsnummer(n) des (der) anzusprechenden Endbenutzergeräte(s) wiedergeben. Alle Endbenutzergeräte 12 empfangen diese Informationen, aber nur das oder die Endbenutzergeräte 12, dessen (deren) Identifikationsnummer(n) der (den) übertragenen entspricht(en), reagiert(en), beispielsweise mit einem Übergang dem Ruhezustand in den Betriebszustand. Werden mit den Signalen des lokalen Rechnersystems 2 neben Identifikationsnummern auch Steuerbefehle übertragen, reagieren nur die Endbenutzergeräte 12 auf die Steuerbefehle, deren Identifikationsnummern den übertragenen entsprechen.

In einem sogenannten Referenz-Modus sendet das lokale Rechnersystem 2 eine oder mehrere als Referenznummern bezeichnete Informationen an die Endbenutzergeräte 12. Eine Referenznummer kann beispielsweise ein im Rahmen einer Werbemaßnahme gezeigtes Produkt angeben. Die Endbenutzergeräte 12 empfangen die Referenznummer(n), die in den Endbenutzergeräten 12 gespeichert wird (werden), deren Bedienknopf innerhalb einer vorgegebenen, mittels des oben genannten Zeitgebers gesteuerten Zeitdauer betätigt wird. Eine Betätigung eines Bedienknopfes nach dem Ablauf der Zeitdauer, die auch als Reaktionszeitvorgabe bezeichnet werden kann, ist eine Speicherung einer Referenznummer nicht mehr vorgesehen.

Um beispielsweise einer Gruppe bestimmter Endbenutzergeräte 12 eine Referenznummer bereitzustellen, kann der Referenz-Modus mit dem Only-Modus kombiniert werden. Dies ermöglicht es beispielsweise, bei einer Fußballveranstaltung den Anhängern eines Vereins Referenznummern zuzusenden, die Produkte des entsprechenden Vereins angeben, während Anhänger des anderen Vereins, die normalerweise an Produkten des Gegners nicht interessiert sind, diese Referenznummern nicht erhalten.

Innerhalb der verschiedenen Betriebsarten kann das lokale Rechnersystem an die Endbenutzergeräte 12 Steuerbefehle übertragen, auf die die Endbenutzergeräte 12 in Abhängigkeit des verwendeten Betriebsmodus reagieren.

Mittels eines ON-Steuerbefehles kann den Benutzern der Endbenutzergeräte 12 die Teilnahme an einer interaktiven Kommunikation in dem lokalen System 1 ermöglicht werden. Nach einer Betätigung seines Bedienknopfes wird ein Endbenutzergerät 12 in den Betriebszustand gebracht, d.h. dessen Funktransceiver wird aktiviert. Mittels des Zeitgebers, der hier als Ablaufzeitgeber dient, wird eine Zeitdauer vorgegeben, für die der Funktransceiver aktiviert bleibt. Wird innerhalb dieser Zeitdauer kein ON-Steuerbefehl empfangen, geht das Endbenutzergerät 12 in seinen Ruhezustand zurück. Auf diese Weise kann verhindert werden, dass neu hinzugekommene Endbenutzergeräte 12 (z.B. Endbenutzergeräte 12, die erst im Verlauf der interaktiven Kommunikationssequenz in den Funkbereich des Rechnersystems 2 gelangen) oder Benutzer, die sich erst im Verlauf der interaktiven Kommunikationssequenz zu einer Teilnahme entschlossen haben, an der interaktiven Kommunikationssequenz teilnehmen können. Dies kann beispielsweise erforderlich sein, wenn die Teilnahme an dieser interaktiven Kommunikationssequenz Daten und/oder Informationen vorheriger interaktiver Kommunikationssequenzen erfordert.

Des Weiteren ist das Endbenutzergerät 12 so ausgelegt, dass sich ein Benutzer während einer ablaufenden interaktiven Kommunikationssequenz entscheiden soll, damit das System seine Entscheidung der jeweiligen interaktive Kommunikationssequenz zuordnen kann. Die Zeitdauer, innerhalb der eine Entscheidung zu treffen ist, wird durch die Aktivierung der grünen Leuchtanzeige angegeben. Diese Vorgehensweise hat den Vorteil, dass Daten der Benutzer eindeutig aufeinanderfolgenden interaktiven Kommunikationssequenzen zugeordnet werden können.

Um während einer ablaufenden interaktiven Kommunikationssequenz Benutzern eine Teilnahme an dieser zu ermöglichen, wenn beispielsweise die Benutzer erst während der ablaufenden interaktiven Kommunikationssequenz in den Funkbereich des Rechnersystems 2 gelangen oder sich im Verlauf der ablaufenden interaktiven Kommunikationssequenz zu einer Teilnahme entschließen, ist es vorgesehen, während der ablaufenden interaktiven Kommunikationssequenz kontinuierlich oder wiederholt ON-Steuerbefehle auszusenden. Empfängt ein Endbenutzergerät 12 während der ablaufenden interaktiven Kommunikationssequenz einen dieser ON-Steuerbefehle und wird während der vorgegebenen Zeitdauer der Bedienknopf bedient, wird das entsprechende Endbenutzergerät 12 an der ablaufenden interaktiven Kommunikationssequenz beteiligt. Dies kann beispielsweise dadurch geschehen, dass das Endbenutzergerät 12 in einer Teilnahme- oder Anwesenheitsliste oder vergleichbaren Datensätzen eingetragen wird. Um zu vermeiden, dass ein so nachträglich an einer ablaufenden interaktiven Kommunikationssequenz beteiligtes Endbenutzergerät 12 nicht bei nachfolgend erhaltenen ON-Steuerbefehle reagiert, werden von dem Rechnersystem 2 entsprechende Steuerbefehle an das neu hinzugekommene und registrierte Endbenutzergerät 12 übertragen.

Wird während der Zeitdauer, für die der Funktransceiver eines Endbenutzergerätes 12 aktiviert ist, einen ON-Steuerbefehl empfangen, bleibt das Endbenutzergerät 12 aktiviert, bis es durch einen OFF-Steuerbefehl ausgeschaltet wird.

Ein SET-Steuerbefehl dient zur Steuerung weiterer Komponenten der Endbenutzergeräte 12. Die Steuerbefehle SET-ROT, SET-GRÜN und SET-GELB aktivieren die Leuchtanzeigen "rot", "grün" bzw. "gelb". Diese Steuerung der Endbenutzergeräte 12 kann beispielsweise dadurch erweitert werden, dass bei einer Aktivierung der Leuchtanzeige "rot" eine Betätigung des Bedienknopfes zu einer Sperrung des entsprechenden Endbenutzergerätes 12 führt, d.h. dass dieses Endbenutzergerät 12 an einer interaktiven Kommunikationssequenz nicht mehr teilnehmen kann. Nach einer Aktivierung der Leuchtanzeige "grün" können beispielsweise die Zeitgeber der Endbenutzergeräte 12 als Reaktionszeitgeber verwendet werden, um die Zeitdauer zu ermitteln, die nach einer Aktivierung der Leuchtanzeige "grün" verstreicht, bis ein Bedienknopf betätigt wird. Der Steuerbefehl SET-GELB kann auch verwendet werden, um eine Sperrung von Endbenutzergeräten 12 aufzuheben. Mittels des Steuerbefehles SET-VIBRA 0-9 werden die Vibrationseinrichtungen der Endbenutzergeräte 12 in der durch die Parameter angegebene Stärke aktiviert.

Um zu ermitteln, bei welchen Endbenutzergeräten 12 die Bedienknöpfe nach einer Aktivierung der Leuchtanzeige "grün" am schnellsten betätigt wurden, wird ein CHECK-Steuerbefehl verwendet. Zur Bewertung der Schnelligkeit bei der Betätigung von Bedienknöpfen können die Zeitgeber genutzt werden, da deren Zählerstände bei schneller Betätigung höher sind als bei einer langsamen Reaktion eines Benutzers eines Endbenutzergerätes 12.

Mittels eines FLUSH-Steuerbefehles kann das lokale Rechnersystem einzelne oder mehrere, beispielsweise in Gruppen verteilte, Endbenutzergeräte 12 veranlassen, gespeicherte Daten zu übertragen, beispielsweise oben beschriebene Referenznummem.

Ferner können die Endbenutzergeräte 12 mittels eines COUNTER-Steuerbefehles und eines CLEAR-Steuerbefehles gesteuert werden, um die Zeitgeber bzw. die Zählerstände und gespeicherte Daten, beispielsweise Referenznummern, zu verändern oder zu löschen.

Im Folgenden werden die in Fig. 3 dargestellten Funktionsblöcke eines Endbenutzergerätes 12 erläutert. Der Block "Taste" erzeugt ein Interrupt-Signal bei einer Betätigung des Bedienknopfes, um das Endbenutzergerät 12 in seinen Betriebsmodus zu bringen. Wird danach kein ON-Steuerbefehl empfangen, veranlasst der Block "Sleep" einen Übergang in den Ruhezustand, wobei die Leuchtanzeigen abgeschaltet werden. Der Block "Empfang" dient zum Empfang von Signalen des lokalen Rechnersystems 2, wobei vordefinierte oder "lernbare" Signale verwendet werden können, die als Startzeichen dienen und angeben, dass folgende Signale Steuerbefehle und/oder Parameter angeben. Nach einem Empfang eines als Endzeichen dienenden Signals verifiziert der Block "Prüfsumme" die empfangenen Signale bzw. einen durch diese angegebenen Datenstrom anhand einer übertragenen Prüfsumme.

Zur Trennung von Steuerbefehlen und Parametern, wie z.B. Endbenutzergeräte 12 identifizierende Nummern und Referenznummern, wird der selbständig arbeitende Block "Parser" verwendet. So gewonnene Daten und Informationen werden zur Steuerung des Endbenutzergerätes 12 mittels des Blocks "Regieregister" genutzt, um die internen Abläufe zu bestimmen. Um die zum Betrieb der Endbenutzergeräte 12 erforderlichen Signale zu vereinfachen, ist es vorgesehen, durch Endbenutzergeräte 12 auszuführende Funktionen nicht durch von dem lokalen Rechnersystem 2 übertragene Signale anzugeben, sondern den Block "Interpreter" zu verwenden, um in Abhängigkeit empfangener Steuerbefehle entsprechende Funktionen aufzurufen.

In Abhängigkeit der empfangenen Steuerbefehle und Parameter steuern die Blöcke "Peripheriesteuerung" und "Treiberblock" die Sprachausgabe und/oder visuelle Ausgabe mittels eines Endbenutzergerätdisplays bzw. die Leuchtanzeigen und Vibrationseinrichtungen.

Mittels des Blocks "Punktmanager" können, beispielsweise wie oben ausgeführt, unter Verwendung der Zeitgeber Gewinnpunkte zugeteilt oder abgezogen werden. Hierbei kann der Block "Präzisionstimer" verwendet werden, der bei einer Aktivierung der Leuchtanzeige "grün" startet und bei einer Betätigung,des Bedienknopfes stoppt. Zur Speicherung von empfangenen Referenznummern und Gewinnpunkten weisen die Endbenutzergeräte 12 den Block "R+P-Speicher" auf, der vorteilhafterweise stromausfallsicher ausgeführt ist.

Zur Übertragung von Signalen von den Endbenutzergeräten 12 zu dem lokalen Rechnersystem 2 dient der Block "Sendefunktion", der angeforderte Daten und/oder Informationen sendet. Um festzustellen, welches Endbenutzergerät 12 Daten und/oder Informationen übertragen hat, ist es vorteilhaft, wenn der Block "Sendefunktion" zusätzlich die entsprechende Identifikationsnummer sendet.

Wird das lokale System 1 in dem Only-Mode betrieben, wird der Block "ID" aktiviert, um eine eindeutige Identifizierung angesprochener Endbenutzergeräte 12 zu ermöglichen.

Eine Übertragung von einem lokalen Rechnersystem 2 zu Endbenutzergeräten 12 beginnt mit einem definierten Startzeichen (z.B. *). Beim Empfang eines Startzeichens wird der Empfangsbuffer der Endbenutzergeräte 12 gelöscht, um mittels von dem lokalen Rechnersystem 2 über die Sendereinheit 8 übertragenen Signalen eine Reihe von Zeichen zu empfangen. Beim Empfang eines Endzeichens (z.B. #) werden die empfangenen Zeichen ausgewertet. Vorteilhafterweise werden Prüfsummen mit übertragen, d.h. vor einem Endzeichen, die seitens der Endbenutzergeräte 12 verifiziert werden, um einen fehlerhaften Empfang zu erkennen. Die in einem Empfangsbuffer eines Endbenutzergerätes 12 gespeicherten Zeichen werden Im Folgenden als Empfangsstring bezeichnet.

Im Allgemeinen beginnt ein Empfangsstring mit Daten, die angeben, wie Endbenutzergeräte 12 auf eine Signalübertragung von dem lokalen Rechnersystem 2 reagieren sollen, d.h. ob das lokale System 1 in dem Radio-Mode, Only-Mode oder Reference-Mode betrieben wird.

Zur Vereinfachung der Signalübertragung zu den Endbenutzergeräten 12 werden vorteilhafterweise 1 Byte große Daten übertragen. Die folgende Tabelle gibt eine Übersicht über mögliche Steuerbefehle, wobei die Spalte "1-Byte-Daten" die übertragenen Signale angibt und die Spalte "Parameter" Parameter bezeichnet, die seitens eines lokalen Rechnersystems 2 übertragenen Steuerbefehlen zugeordnet werden können. In den Spalten "Befehl" und "Aufgabe" sind die Steuerbefehle sowie deren Aufgaben bzw. Funktionen aufgeführt.

**Tabelle 1: Steuerbefehle**

| 1-Byte-Daten | Parameter | Befehl | Aufgabe |
|---|---|---|---|
| A | - | ALLE | Alle Geräte im Empfangsbereich reagieren. |
| E | n | EINER | Nur das Gerät mit ID(n) reagiert. |
| K | n | GRUPPE | Nur Geräte einer Gruppe (Klasse) Reagieren. Gruppen-Zuweisung |
| Y | - | GELB | Leuchtanzeige schaltet auf Gelb, Taste wird freigegeben (unlock). |
| R | - | ROT | Leuchtanzeige schaltet auf Rot. |
| G | n | GRÜN | Leuchtanzeige schaltet auf Grün, Timer läuft n Sekunden, dann Tastensperrung (lock). |
| V | n,r | VIBRATION | Vibration für n Sekunden, r definiert ein Bitmuster zur Erzeugung einer "taktilen Melodie". |
| / | - | AFTER KEY | Alle Befehle rechts von "/" werden erst nach Tastendruck ausgeführt |
| F | n,m | FLUSH | Referenzspeicher wird (mit Identifikationsnummer) übertragen. |
| M | n, +/-,m | MEMORY | Speicherplatz n wird mit m geladen, +/- zählt dazu bzw. zieht ab. |
| C | - | CLEAR | Gesamte Speicherlöschung |
| S | n,n.. | SPEAK | Sprachphrasen n+n+n... werden gesprochen. |
| ? bzw.! | - | CHECK | Ermittel Gewinner. |
| <=> | n,m | IF | Befehl m wird nur ausgeführt, wenn Bedingung n erfüllt ist. |
| D | Text | DISPLAY | Zeigt Text auf LCD-Display. |
| X | Daten | EXTENSION | Serielle (z.B. I²C) Erweiterung für Peripherie |

Eine Besonderheit stellt der Steuerbefehl "/" dar, der als sogenannter "AFTER KEY"-Steuerbefehl den Empfangsstring in zwei Teile teilt. Alle nach diesem Steuerbefehl empfangenen Steuerbefehle, d.h. alle rechts von diesem Zeichen stehenden Anweisungen in dem Empfangsstring, werden erst nach einer Betätigung eines Bedienknopfes eines Endbenutzergerätes 12 ausgeführt, sofern das Endbenutzergerät 12 nicht gesperrt ist.

Zur Sperrung eines Endbenutzergerätes 12, d.h. einer das Endbenutzergerät 12 steuernden Betätigung des Bedienknopfs, ist möglich, eine sogenannte Selbstsperrung zu verwenden, wobei nach einer Betätigung eines Bedienknopfes dieser bis zu einer Freigabe seitens des lokalen Rechnersystems 2 gesperrt bleibt Ferner ist es möglich, dass ein Bedienknopf gesperrt wird, wenn der als Reaktionszeitnehmer arbeitende Zeitgeber eines Endbenutzergerätes 12 abgelaufen ist (d.h. beim Rückwärtszählen bei Null angekommen ist). Zum Entsperren bzw. Freigeben eines Bedienknopfes wird der Steuerbefehl "Y" verwendet.

Zum besseren Verständnis sind Im Folgenden einige Steuerbefehlssequenzen aufgeführt, wobei sowohl die Start- und Endzeichen als auch Prüfsummen nicht dargestellt sind.
- AR: Alle Endbenutzergeräte im Empfangsbereich schalten auf "ROT".
- AR/S5,7: Alle Endbenutzergeräte schalten auf "ROT". Nach einem Tastendruck werden die Sprachphrasen 5 und 7 (z.B. "Sie sind" "disqualifiziert") ausgegeben.
- A/K5: Alle Endbenutzergeräte empfangen. Ein Tastendruck bewirkt eine Zuordnung zu Gruppe 5.
- K5/K4: Nur Gruppe 5 kann entscheiden, ob sie nach Tastendruck in Gruppe 4 wechseln will.
- E1234G4.5: Das Endbenutzergerät 1234 schaltet auf "GRÜN". Innerhalb von 4,5 Sekunden kann die Taste betätigt werden.
- E1234F: Der Referenzspeicher des Endbenutzergerätes 1234 wird übertragen (F=FLUSH).
- E1234VS2,7/C: Das Endbenutzergerät 1234 vibriert (V = Vibrator) und die Sprachphrasen 2 und 7 werden hörbar (z.B. Aufforderung, die Taste zu drücken). Nach Tastendruck wird der Referenzspeicher gelöscht (C = CLEAR).
- AV3: Alle Endbenutzergeräte vibrieren für 3 Sekunden.
- AG4/<1M2+5: Alle Endbenutzergeräte schalten auf "GRÜN". Der Zeitgeber läuft 4 Sekunden. Ein Tastendruck vor Ablauf einer Sekunde erhöht den Punktezähler 2 um fünf Punkte.

Wenn mittels der Beschallungsanlage 4 und/oder des Großbilddisplays 6 Waren oder Dienstleistungen beworben werden, die selbst bestellt werden können oder für die weiterführende Informationen abrufbar sind, werden die oben beschriebenen Referenznummern von dem lokalen Rechnersystem zu den Endbenutzergeräten 12 übertragen. Ist ein Benutzer eines Endbenutzergerätes 12 an den Bestellmöglichkeiten interessiert, wird die entsprechende Referenznummer in Antwort auf eine Betätigung des Bedienknopfes gespeichert. Wird beispielsweise der Steuerbefehl "AG30/M5,18" übertragen, werden alle Endbenutzergeräte 12 eines lokalen Systems 1 angesprochen, wobei die Endbenutzergeräte 12 die Referenznummer 18 in einem Register 5 speichern, deren Bedienknopf betätigt wird.

Um eine entsprechende Bestellung von Waren und Dienstleistungen oder weiterführenden Informationen durchzuführen, werden die in Endbenutzergeräten 12 gespeicherten Referenznummern zu dem lokalen Rechnersystem 2 so übertragen, dass eine eindeutige Zuordnung einer Bestellung zu einem Endbenutzergerät 12 erfolgen kann. Die so eindeutig identifizierte, d.h. einem Benutzer eines Endbenutzergerätes 12 zugeordnete Bestellung wird dann von dem lokalen Rechnersystem 2 beispielsweise über ein Computemetzwerk oder telefonisch, an den entsprechenden Hersteller bzw. Anbieter der Waren und Dienstleistungen weitergeleitet.

Die Übertragung von Referenznummern von Endbenutzergeräten 12 zu dem lokalen Rechnersystem 2 kann beispielsweise erfolgen, indem das lokale System 1 in dem Only-Mode betrieben wird. Hierbei werden die Endbenutzergeräte 12 einzeln adressiert und mittels des Steuerbefehls "FLUSH" aufgefordert, gespeicherte Referenznummem zu übertragen. Die Zuordnung der übertragenen Referenznummern, d.h. einer oder mehreren Bestellungen, kann dann seitens des lokalen Rechnersystems 2 vorgenommen werden, da bei einem Betrieb in dem Only-Mode immer nur ein Endbenutzergerät 12 sendet. Alternativ oder ergänzend ist es vorgesehen, dass diese Zuordnung erreicht wird, indem das sendende Endbenutzergerät 12 Referenznummern zusammen mit seiner Identifizierungsnummer überträgt.

Die Übertragung von Referenznummern zu dem lokalen Rechnersystem 2 kann auch mittels der Schnittstelleneinheit 14 erfolgen, wobei beispielsweise am Ausgang des Veranstaltungsortes, in dem das lokale System 1 verwendet wird, entsprechende Vorrichtungen angeordnet sind, wie z.B. Transponder, Bluetooth-Einrichtungen und dergleichen, um beim Verlassen des Veranstaltungsortes die Referenznummem von den Endbenutzergeräten 12 zu erhalten.

Die Bestellung von Waren, Dienstleistungen und weiterführenden Informationen kann auch unabhängig von dem lokalen Rechnersystem 2 erfolgen, wenn beispielsweise ein Anbieter einer Dienstleistung in seinem Ladenlokal eine mit der Sendereinheit 8 und/oder der Schnittstelleneinheit 14 vergleichbare Vorrichtung bereitstellt, um Referenznummern aus Endbenutzergeräten 12 auszulesen. Ebenso ist es möglich, dass Referenznummern von Endbenutzergeräten 12 über ein Computer- und/oder Telefonnetzwerk zu entsprechenden Herstellern bzw. Anbietern übertragen werden, was beispielsweise durch einen Benutzer eines Endbenutzergerätes 12 zu Hause durchgeführt werden kann.

Wird beispielsweise mittels eines lokalen Systems 1 ein Wett- oder Ratespiel durchgeführt, kann es erforderlich sein, die Anzahl teilnehmender Endbenutzergeräte 12 durch ein Ausscheidesystem zu reduzieren. Hierfür wird der gruppierende Steuerbefehl "K" verwendet, der in einem Empfangsstring vor einem "AFTER KEY"-Steuerbefehl zur Auswahl einzelner oder mehrerer Endbenutzergeräte 12 dient, wohingegen eine Zuweisung einzelner oder mehrerer Endbenutzergeräte 12 zu einer Gruppe erfolgt, wenn der Steuerbefehl "K" dem "AFTER KEY"-Steuerbefehl in einem Empfangsstring folgt. Zur Veranschaulichung ist eine beispielhafte Steuerbefehlsfolge aufgeführt:
- AG/K10: Wer seinen Bedienknopf drückt, kommt in Gruppe 10.
- K10Y K10G/K9: Nur wer in Gruppe 10 war, kann in Gruppe 9 kommen...
- ·:
- ·:
- ·: usw. bis Gruppe 1 erreicht wurde.
- K1G1: Aus Gruppe 1 wird der Schnellste ermittelt.
- K1?: Identifizierungsnummer des Schnellsten festgestellt und übertragen.
- AYG/K10: Beim nächsten Spiel dürfen wieder alle mitmachen.
- K5E1234F: Ein Teilnehmer einer Gruppe wird "geflusht".

Um bei einem Wett- oder Ratespiel Gewinner zu ermitteln, d.h. Benutzer von Endbenutzergeräten 12, die die Fragen korrekt oder am schnellsten beantwortet haben, wird der Steuerbefehl "CHECK" (?, !) verwendet. Zu Beginn eines solchen Spieles werden teilnehmende Endbenutzergeräte 12 so initialisiert, dass sie die gleiche Startzeit aufweisen. Daher muss diese in hinreichend kleine Zeiteinheiten unterteilt werden, um den schnellstens, ersten oder den letzten, beispielsweise bei einer Auktion den am höchsten bietenden Teilnehmer bestimmen zu können. Mit dem Steuerbefehl "?" wird vom schnellsten bis zum langsamsten Ereignis (Betätigung eines Bedienknopfes) jedes Mal ein Zeitfenster abgefragt. Im Gegensatz dazu dient der Steuerbefehl "I" dazu, den letzten, einen Bedienknopf betätigenden Teilnehmer zu ermitteln (z.B. den letzten Bieter bei einer Auktion). Werden die Zeitfenster klein genug gewählt, wird in jedem Zeitfenster idealerweise nur ein Endbenutzergerät 12 abgefragt. Da dies nicht in allen Fällen gewährleistet werden kann, wird die Übertragung der Identifizierungsnummem der Endbenutzergeräte 12 für jedes Endbenutzergerät 12 zeitverzögert durchgeführt. Zur Berechnung solcher Verzögerungen können die Identifizierungsnummern verwendet werden, wobei sich beispielsweise eine Verzögerung aus dem Produkt einer Identifizierungsnummer mit der entsprechenden Übertragungszeit von dem Endbenutzergerät 12 zu dem lokalen Rechnersystem 2 ergibt. Um beispielsweise bei einem Ratespiel die fünf schnellsten Teilnehmer zu ermitteln, erzeugt und überträgt das lokale Rechnersystem 2 fünf aufeinanderfolgende Steuerbefehle "?". Im Gegensatz dazu würde der Steuerbefehl "!" bei einer Auktion feststellen, wer als letzter den Bedienknopf seines Endbenutzergerätes 12 betätigt hat. Hierbei kann es erforderlich sein, mehrere Steuerbefehle "!" zu übertragen.

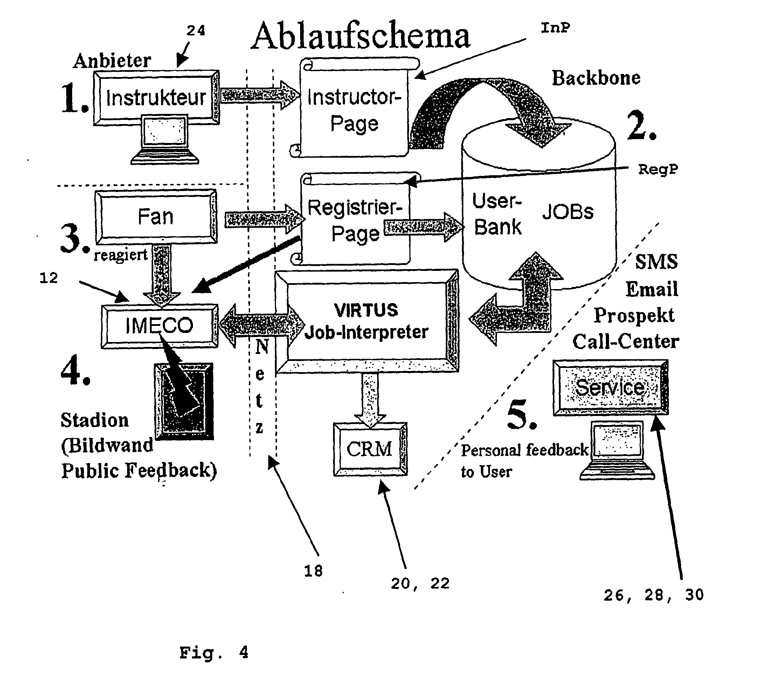

Anhand von Fig. 4, die das System 1' von Fig. 2 teilweise vereinfacht und teilweise detaillierter veranschaulicht, wird ein beim Betrieb des Systems 1' verwendetes Ablaufschema erläutert. Ein Anbieter von Waren oder Dienstleistungen möchte als Auftraggeber 24 das System 1' nutzen. Hierfür greift er beispielsweise über das Internet auf das zentrale Rechnersystem 20 zu, um den Auftrag für Werbemaßnahmen für Waren oder Dienstleistungen in Auftrag zu geben. Hierfür wird eine als Instructor-Page InP bezeichnete Webpage oder Website aufgerufen, um die Art der durchzuführenden Werbemaßnahme zu definieren und anzugeben, auf welche Weise ein Benutzer (z.B. ein Fan eines Fußballvereins) eines Endbenutzergerätes 12 Rückmeldungen erhalten kann bzw. die beworbenen Waren oder Dienstleistungen erwerben bzw. in Anspruch nehmen kann.

Als Rückmeldungen sind sogenannte SMS-Nachrichten über Mobilfunknetze, E-mails, per Post versendete Informationen, telefonische Rückrufe seitens des Anbieters und dergleichen vorgesehen. Ferner können an den Waren oder Dienstleistungen interessierte Benutzer von Endbenutzergeräten 12 Bonuspunkte erhalten, die sie als geldwerten Vorteil beim Erwerb der Waren bzw. bei einer Inanspruchnahme der Dienstleistung verwenden können. Des weiteren ist es möglich, dass auf die von dem Anbieter in Auftrag gegebene Werbemaßnahme reagierende Benutzer noch am Veranstaltungsort an einer Verlosung teilnehmen können.

Entsprechend den Vorgaben des Anbieters 24 werden seitens des zentralen Rechnersystems 20 einzelne oder mehrere Referenznummern definiert, die einzelne oder mehrere Arten von Rückmeldungen bezeichnen oder bei einer Zurückübertragung von einem Endbenutzergerät 12 angeben, dass dessen Benutzer die beworbene Ware oder Dienstleistung erwerben bzw. in Anspruch nehmen möchte. Ferner wird eine Anweisungsliste, die im Folgenden als Jobliste bezeichnet wird, erstellt, um in Antwort auf von Endbenutzergeräten 12 zurückgesendeten Referenznummern entsprechend zu reagieren. Beispiele für solche Anweisungen (Jobs) sind die Versendung von Sprachmeldungen, SMS-Nachrichten, E-mails, Fax-Nachrichten und dergleichen, Anweisungen an eine Telefonzentrale, den entsprechenden Interessenten zurückzurufen und die Beschallungsanlage 4 und/oder das Großbilddisplay 6 (siehe Fig. 1 und 2) zu steuern. Die Steuerung der Beschallungsanlage 4 und/oder des Großbilddisplays 6 kann so erfolgen, dass in Antwort auf von einem Endbenutzergerät 12 zurückgesendete Referenznummern für den entsprechenden Benutzer spezifischen Informationen akustisch und/oder visuell wiedergegeben werden, beispielsweise durch eine Nennung des Namens oder einer Wiedergabe eines Fotos.

Bei einer Durchführung der gewünschten Werbemaßnahme werden, wie oben beschrieben, Referenznummern an Endbenutzergeräte 12 übertragen, die diese speichern und verwenden können.

Ist ein Benutzer eines Benutzergerätes 12 an einer beworbenen Ware oder Dienstleistung interessiert, aktiviert er sein Endbenutzergerät 12 und bestätigt entsprechende Referenznummem. Dies kann seitens des Endbenutzergerätes 12 durch eine Sprachausgabe kommentiert werden. Das Endbenutzergerät 12 wird von dem lokalen Rechnersystem 2 abgefragt, um die gespeicherten Referenznummern zu erhalten, die über das Netz 18 zu dem zentralen Rechnersystem 20 übertragen werden. Ferner erhält das zentrale Rechnersystem 20 die das Endbenutzergerät 12 kennzeichnende Identifikationsnummer und, falls nicht schon vorhanden, Daten, die durchzuführende Jobs (Anweisungen) spezifizieren. Anhand der erhaltenen Identifizierungsnummer wird der entsprechende Benutzer ermittelt, um dessen personenbezogene Daten zu laden. Danach werden die spezifizierten Anweisungen nacheinander ausgeführt, die vorteilhafterweise mitprotokolliert werden.

Um dem System 1' personenbezogene Daten bereitzustellen, werden die Benutzer von Endbenutzergeräten 12 registriert. Dies kann beispielsweise durch einen Zugriff auf eine als Registrier-Page RegP bezeichnete Webpage oder Website erfolgen, über die persönliche Daten eingegeben werden. In Antwort darauf wird eine Identifizierungsnummer erstellt, die dem entsprechenden Endbenutzergerät 12 zugeordnet und in diesem gespeichert wird. Die Speicherung kann auf die oben beschriebenen Arten erfolgen.

In der folgenden Tabelle sind mögliche Steuerbefehle zur Verwendung bei dem vorher geschilderten Ablaufschema aufgeführt.

**Tabelle 2: Steuerbefehle für Ablaufsteuerung**

| Befehl | Funktion | Beispiel |
|---|---|---|
| PLAY | Spielt ein neues Script oder Sequenz ab. | PLAY Auktion |
| SHOW | Zeigt Bilder oder Filme. | SHOW Film, mpg |
| DISPLAY | Zeigt Texte und Fotos. | Display "Sieger" FOTO (1) |
| SEND | Sendet Daten zu den Endbenutzergeräten. | SEND AG10/M1+1S4,5,6 (Start+Endezeichen+Prüfsumme wird automatisch generiert |
| FIRST | Ermittelt die schnellsten Endbenutzergerätetasten betätigenden Benutzer. | FIRST 5 |
| LAST | Ermittelt die letzten Endbenutzergerätetasten betätigenden Benutzer. | LAST 3 |
| WAIT | Steuerung wartet für n Sekunden. | WAIT 20 |
| NEXT | Führt Schleifen ins Scripts oder Sequenzen aus | LOOP ----- Befehle ....... NEXT LOOP |
| UNTIL | Wiederholung von Scripts oder Sequenzen bis eine oder mehrere Bedingung erfüllt sind. | UNTIL TIMEOUT SEND A? |

Hierbei können folgende automatische Variablen der Ablaufsteuerung verwendet werden:
- TIMEOUT(n): Zählt vom gesetzten Wert im Sekundentakt auf Null.
- FIRST(n), LAST(n): Enthält Namen und Anschrift der jeweils ersten und letzten Teilnehmer.
- FOTO(n): Lädt das Foto (z.B. im JPG-Format) eines gewählten Spielers aus einer Datenbasis.
- LISTE: Enthält nach einem FLUSH alle Identifizierungsnummem der Endbenutzergeräte, die die entsprechende Referenznummer durch Tastendruck speicherten.

Die Steuerbefehle zur Ablaufsteuerung erlauben eine Textdarstellung und eine Wiedergabe von Bildern und Filmen auf dem Großbilddisplay 6. Der Steuerbefehl "SHOW" zeigt Bilder und Filme, während der Steuerbefehl "DISPLAY" Teste wiedergibt. Auf diese Weise ist es möglich, mit Benutzern von Endbenutzergeräten 12 interaktiv zu kommunizieren. Im Folgenden ist eine beispielhaft zu verstehende Ablaufsteuerungen aufgeführt:

### Beispiele für eine Kommunikationssequenz

- SHOW SV04.bmp: Zeigt Foto eines Vereins.
- DISPLAY "Schalke-:
- Fans jetzt drücken": Text erscheint auf Display.
- SEND AG10/K1: Innerhalb von 10 Sekunden muss Taste gedrückt werden. Wer sich jetzt entschieden hat, ist zunächst gesperrt (lock).
- WAIT 20: Ablaufsteuerung wartet.
- SHOW BV09.bmp: Zeit Foto eines anderen Vereins.
- DISPLAY "Jetzt drücken:
- Borussia-Fans": Text erscheint auf Display.
- SEND AG10/K2: Alle nicht gesperrten Endbenutzergeräte können durch Tastendruck in Gruppe 2 wechseln.
- WAIT 20:
- SEND K1Y: Gruppe 1 für erstes Spiel freigeben.
- SHOW Film 1.MPG: Film wird abgespielt.
- WAIT 10:
- SEND K1R: Endbenutzergeräte der Gruppe 1 schalten auf "ROT".

### Beispiel für eine Auktion

- SUMME = 50 €:
- SHOW Einleitung.MPG: Zeigt das zu ersteigernde Pro- dukt.
- LOOP: Sprungmarke setzen.
- SEND AY: Alle Endbenutzergeräte schalten auf Gelb.
- WAIT 3:
- SEND AR: Alle Endbenutzergeräte schalten auf Rot.
- SHOW Auktionator.MPG: Anzeige: "machen Sie Ihr Gebot".
- DISPLAY "JETZT" SUMME:
- SUMME + 20 €: Forderung wird erhöht.
- WAIT 5:

### TIMEOUT 5 (Sekunden)

- SEND AG2/M1+1: Tastendruck erhöht Speicher M1 um einen Punkt.
- WAIT 2:
- UNTIL TIMEOUT LAST: Letzter Tastendruck wird ermittelt.
- DISPLAY FOTO(LAST): Foto und Vornamen des Benutzers,
- VORNAME(LAST): der als Letzter gedrückt hat, wird angezeigt.
NEXT LOOP Ohne Timeout wird Auktion fortgesetzt.
EMAIL Anbieter@web.com LAST Der letzte Bieter wird zum Anbieter übertragen.
DISPLAY "Applaus für" Der Gewinner (Foto noch zu sehen)
VORNAME(LAST) wird gefeiert.

### Beispiel für ein Reaktionsspiel

- SEND AY: Alle Endbenutzergeräte schalten auf "GELB".
- WAIT 10: Kleine Pause.
- END AR/M1 = 0: Alle Endbenutzergeräte schalten auf "ROT". Tastendruck löscht Speicher M1.
- SHOW FILM.MPG:
- WAIT 5:
- SEND AG3/M1+1: Endbenutzergeräte schalten für 3 Sekunden auf "GRÜN". Tastendruck erhöht Speicher M1 um einen Punkt.
WAIT 3
UNTIL FIRST 3 SEND A? Die drei Schnellsten werden ermittelt.
DISPLAY "Das sind die Sieger"
DISPLAY FOTO(FIRST 3)
SEND E[UID(FIRST 1)]M1 Die Gewinner erhalten Punkte und
+ 200V* deren Endbenutzergeräte vibrieren.
SEND E[UID(FIRST 2)]M1 + 100V
SEND E[UID(FIRST 2)]M1 + 50V
EMAIL FIRST 1 WINNER.TEXT Der Sieger bekommt einen Preis per E-Mail.

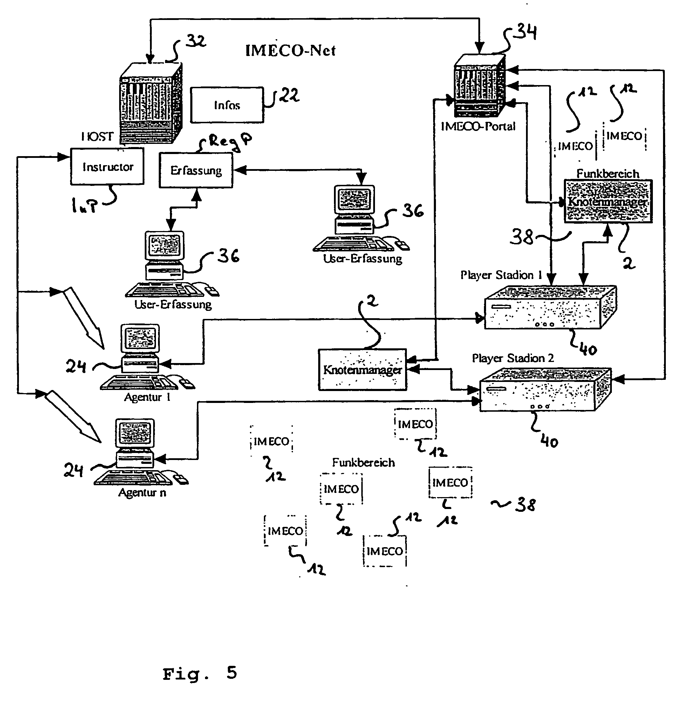

Ein weiterer vorgesehener Aufbau des Systems zur interaktiven Kommunikation ist in Fig. 5 schematisch dargestellt. Das zentrale Rechnersystem 20 (siehe Fig. 2 und 4) umfasst hier ein als Host-Rechner bezeichnetes Hauptrechnersystem 32 und ein als IMECO-Portal bezeichnetes Rechnersystem 34, über das die lokalen Rechnersysteme 2 (siehe Fig. 1 und 2) mit dem Host-Rechner 32 kommunizieren und Daten für ihren Betrieb erhalten und übertragen können.

Zur Erfassung von Benutzern von Endbenutzergeräten 12 sind Rechnersysteme 36, beispielsweise Personal-Computer, vorgesehen, die dort angeordnet sein können, wo die Endbenutzergeräte 12 erhältlich sind. Mittels der Rechner 36 kann, wie oben beschrieben, auf die von dem Host-Rechner 32 bereitgestellte Webpage oder Website RegP zugegriffen werden, um personenbezogene Daten zu erfassen und einzelnen Endbenutzergeräten 12 zuzuordnen.

Um die von dem System zur interaktiven Kommunikation bereitgestellten Funktionen zu nutzen, kommunizieren Auftraggeber 24, beispielsweise Werbeagenturen, mittels der Webpage oder Webseite IEP mit dem Host-Rechner 32. Dieser leitet in Abhängigkeit der Aufträge entsprechende Daten an das Portal 34 weiter, auf die zur Durchführung interaktiver Kommunikationssequenzen von lokalen Rechnersystemen 2 zugegriffen werden kann. In Abhängigkeit durchzuführender Kommunikationssequenzen steuern die lokalen Rechnersysteme 2 die diesen zugeordneten, hier nicht dargestellten, Komponenten (siehe Fig. 1 und 2), um Endbenutzergeräten 12 in dem jeweiligen Funkbereich 38 interaktive Kommunikation zu ermöglichen. Des weiteren ist es vorgesehen, beispielsweise mittels einer Beschallungsanlage oder einer Großbildleinwand wiederzugebende Informationen (Musik, Sprache, Standbilder, bewegte Bilder) von dem Portal 34 zu entsprechenden, den lokalen Systemen zugeordneten Wiedergabegeräten 40 zu übertragen. Alternativ oder ergänzend ist es möglich, solche Daten auch unmittelbar von Rechnersystemen der Auftraggeber 24 an die Wiedergabegeräte 40 zu übermitteln. Damit ein Anbieter überprüfen kann, welche Informationen bei einer von ihm in Auftrag gegebenen interaktiven Kommunikation den Benutzern der Endbenutzergeräte 12 präsentiert werden, können die von den Wiedergabegeräten 40 wiedergegebenen Informationen auch zu entsprechenden Rechnersystemen der Auftraggeber 24 übertragen werden.

Wie oben anhand einiger Beispiele ausgeführt, wird es durch die vorliegende Erfindung ermöglicht, eine interaktive Kommunikation zwischen Besuchern von Großveranstaltungen und werbenden Unternehmen durchzuführen. Eine vorherige Erfassung ausgewählter persönlicher Daten von teilnehmenden Personen ermöglicht es, statistische, werberelevante und verkaufstechnische Datenauswertungen zu erstellen. Die Verwendung der einfach aufgebauten, kostengünstigen und ohne langwierige Genehmigungsverfahren einsetzbaren Endbenutzergeräte stellt einen weiteren Vorteil dar. Des weiteren erlaubt die Vernetzung mehrerer lokaler Systeme Werbemaßnahmen nicht nur auf einen Veranstaltungsort begrenzt durchzuführen, sondern an mehreren Veranstaltungsorten, auch zeitgleich, vorzunehmen und auszuwerten.

## Patentansprüche

1. System zur interaktiven Kommunikation, mit:
- einem lokalen Rechnersystem (2), das mit einer Sendereinheit (8) und einer Empfängereinheit (10) zur drahtlosen Signalübertragung verbunden ist,
- einer Wiedergabeeinheit (4, 6) zur Wiedergabe von Informationen, und
- einer Mehrzahl von Endbenutzergeräten (12), die jeweils eine Sende- und Empfangseinheit zur drahtlosen Signalübertragung von und zu dem lokalen Rechnersystem (2) aufweisen, wobei
- das lokale Rechnersystem (2) ausgelegt und programmiert ist, in Abhängigkeit von mit der Wiedergabeeinheit (4, 6) wiedergegebenen Informationen Signale an die Endbenutzergeräte (12) zu senden, um den Betrieb wenigstens eines Endbenutzergerätes (12) zu steuern, wobei
- die Sendereinheit (8) ein einkanaliger Sender ist, der dazu eingerichtet ist, zu einem Ereignls Signale auszusenden, die von einer Anzahl von Endbenutzergeräten (12), die mit Empfangsgeräten ausgestattet sind, gleichzeitig zu empfangen sind,
- jedes Endbenutzergerät (12) Wiedergabeeinrichtungen zur Wiedergabe von Informationen in Abhängigkeit von den von dem lokalen Rechnersystem (2) erhaltenen Signalen aufweist,
- jedes Endbenutzergerät (12) eine Eingabeeinrichtung zur Eingabe von Daten durch einen Benutzer in Antwort auf die mittels der Wiedergabeeinrichtungen und/oder der Wiedergabeeinheit (4, 6) wiedergegebenen Informationen aufweist,
- jedes Endbenutzergerät (12) Speichereinrichtungen aufweist, um in Abhängigkeit von den von dem lokalen Rechnersystem (2) erhaltenen Signalen und/oder in Abhängigkeit von den durch den Benutzer eingegebenen Daten zu speichern, und
- jedes Endbenutzergerät (12) ausgelegt und programmiert ist, in Antwort auf die von dem lokalen Rechnersystem (2) erhaltenen Signale die gespeicherten Daten wenigstens teilweise zu dem lokalen Rechnersystem (2) zu übertragen.

2. System nach Anspruch 1, bei dem die Wiedergabeeinheit (4, 6) eine Einheit (4) zur Wiedergabe akustischer Informationen und/oder eine Einheit (6) zur Wiedergabe visueller Informationen umfasst.

3. System nach einem der vorherigen Ansprüche, mit:
- einer mit dem lokalen Rechnersystem (2) verbundenen Schnittstelleneinheit (14) zur Signalübertragung zu und von einzelnen, benachbart zu der Schnittstelleneinheit (14) angeordneten und/oder mit der Schnittstelleneinheit (14) verbundenen Endbenutzergeräten (12), wobei
- das lokale Rechnersystem (2) ausgelegt und programmiert ist, unter Verwendung der Schnittstelleneinheit (14) Signale zu diesen Endbenutzergeräten (12) zu übertragen, um diese Endbenutzergeräte (12) zur Übertragung von gespeicherten Daten zu der Schnittstelleneinheit (14) zu steuern.

4. System nach einem der vorherigen Ansprüche, mit:
- einem zentralen Rechnersystem (20), und
- einem Netzwerk (18) zur Datenübertragung zwischen dem zentralen Rechnersystem (20) und dem lokalen Rechnersystem (2), wobei
- das zentrale Rechnersystem (20) ausgelegt und programmiert ist, Informationen zur Wiedergabe mittels der Wiedergabeeinheit (4, 6) zu dem lokalen Rechnersystem (2) zu übertragen.

5. System nach einem der vorherigen Ansprüche, mit wenigstens einer Datenbasis (16, 22) zur Speicherung von mittels der Wiedergabeeinheit (4, 6) wiederzugebenden Informationen, benutzerbezogenen, die einzelnen Benutzer der Endbenutzergeräte (12) betreffenden Daten und von Daten zur Steuerung von Signalübertragungen von und zu dem lokalen Rechnersystem (2).

6. System nach Anspruch 5, bei dem eine der wenigstens einen Datenbasis (16, 22) dem lokalen Rechnersystem (2) und/oder dem zentralen Rechnersystem (20) zugeordnet ist.

7. System nach einem der vorherigen Ansprüche, bei dem das lokale Rechnersystem (2) und die Endbenutzergeräte (12) ausgelegt und programmiert sind, Signale zur drahtlosen Signalübertragung bei einer vorbestimmten Frequenz zu übertragen.

8. System nach einem der vorherigen Ansprüche, bei dem das lokale Rechnersystem (2) ausgelegt und programmiert ist, in Abhängigkeit von von einem der Endbenutzergeräte (12) erhaltenen Daten Daten zu wenigstens einem anderen System (26, 28, 30) zu übertragen, das in Abhängigkeit von den von dem lokalen Rechnersystem (2) erhaltenen Daten Daten und/oder Informationen dem Benutzer des Endbenutzergerätes (12) unabhängig von dem Endbenutzergerät (12) bereitstellt.

9. System nach einem der Ansprüche 4 bis 8, bei dem
- das lokale Rechnersystem (2) eingerichtet und programmiert ist, in Abhängigkeit von von einem der Endbenutzergeräte (12) erhaltenen Daten Daten an das zentrale Rechnersystem (20) zu übertragen, und
- das zentrale Rechnersystem (20) eingerichtet und programmiert ist, in Antwort und in Abhängigkeit von den von dem lokalen Rechnersystem (2) erhaltenen Daten als ein dem Benutzer des Endbenutzergerätes (12) zugeordnetes Rechnersystem zu arbeiten.

10. System nach einem der vorherigen Ansprüche, bei dem das lokale Rechnersystem (2) eingerichtet und programmiert ist, Informationen mittels der Wiedergabeeinheit (4, 6) in Abhängigkeit von Daten wiederzugeben, die von einem Rechnersystem (24) eines das System in Anspruch nehmenden Betreibers übertragen wurden.

11. System nach Anspruch 10, soweit der Anspruch 10 von den Ansprüchen 4 bis 9 abhängt, bei dem das lokale Rechnersystem (2) Daten von dem zentralen Rechnersystem (20) erhält, die die Daten des Rechnersystems des das System in Anspruch nehmenden Rechnersystembetreibers charakterisieren.

12. Endbenutzergerät (12) für das System nach einem der Ansprüche 1 bis 11 eingerichtet und/oder programmiert ist, mit
- einer Sende- und Empfangseinheit zur drahtlosen Signalübertragung von und zu einem lokalen Rechnersystem (2), wobei
-- der Betrieb jedes Endbenutzergerätes (12) durch von dem lokalen Rechnersystem (2) ausgesendete Informationen gesteuert ist,
-- jedes Endbenutzergerät (12) Wiedergabeeinrichtungen zur Wiedergabe von Informationen in Abhängigkeit von den von dem lokalen Rechnersystem (2) erhaltenen Signalen aufweist,
-- jedes Endbenutzergerät (12) eine Eingabeeinrichtung zur Eingabe von Daten durch einen Benutzer in Antwort auf die mittels der Wiedergabeeinrichtungen und/oder der Wiedergabeeinheit (4, 6) wiedergegebenen Informationen aufweist,
-- jedes Endbenutzergerät (12) Speichereinrichtungen aufweist, um in Abhängigkeit von den von dem lokalen Rechnersystem (2) erhaltenen Signalen und/oder in Abhängigkeit von den durch den Benutzer eingegebenen Daten zu speichern, und
-- jedes Endbenutzergerät (12) ausgelegt und programmiert ist, in Antwort auf die von dem lokalen Rechnersystem (2) erhaltenen Signale die gespeicherten Daten wenigstens teilweise zu dem lokalen Rechnersystem (2) zu übertragen.

13. Rechnersystem, das zur Verwendung als lokales Rechnersystem (2) und/oder zentrales Rechnersystem (20) für das System nach einem der Ansprüche 1 bis 11 eingerichtet und/oder programmiert ist, das mit
mit einer Sendereinheit (8) und einer Empfängereinheit (10) zur drahtlosen Signalübertragung verbunden ist, und mit
- einer Wiedergabeeinheit (4, 6) zur Wiedergabe von Informationen verbunden ist, und das ausgelegt und programmiert ist, in Abhängigkeit von mit der Wiedergabeeinheit (4, 6) wiedergegebenen Informationen Signale an eine Vielzahl von Endbenutzergeräten (12) zu senden, um den Betrieb wenigstens eines Endbenutzergerätes (12) zu steuern, wobei
- die Sendereinheit (8) ein einkanaliger Sender ist, der dazu eingerichtet ist, von dem Rechnersystem zu einem Ereignis erzeugte Signale auszusenden, die von einer Anzahl von Endbenutzergeräten (12), die mit Empfangsgeräten ausgestattet sind, gleichzeitig zu empfangen sind,
- aufgrund von von dem Rechnersystem (2) erzeugten und ausgesendeten Signalen Informationen auf Wiedergabeeinrichtungen jedes Endbenutzergerätes (12) ausgegeben werden,
- aufgrund von von dem Rechnersystem (2) erzeugten und ausgesendeten Signalen sowie von Daten, die mittels einer Eingabeeinrichtung jedes Endbenutzergerät es (12) durch einen Benutzer in Antwort auf die mittels der Wiedergabeeinrichtungen und/oder der Wiedergabeeinheit (4, 6) wiedergegebenen Informationen in Speichereinrichtungen jedes Endbenutzergerätes Daten gespeichert werden, und
- das Rechnersystem von jedem Endbenutzergerät (12) in Antwort auf die von dem Rechnersystem ausgesandten Signale wenigstens teilweise die gespeicherten Daten übertragen bekommt.

14. Verfahren zur interaktiven Kommunikation, mit folgenden Schritten:
- Wiedergeben von Informationen mittels einer Wiedergabeeinheit (4, 6) einer Großveranstaltung unter Steuerung eines lokalen Rechnersystems (2),
- Übertragen von drahtlosen Signalen von einer Sendenainheit (8), die ein ein kanaliger sender ist, des lokalen Rechnersystems (2) zu Empfangseinheiten einer Mehrzahl von Endbenutzergeräten (12), wobei
- beim Übertragen der drahtlosen Signale Signale in Abhängigkeit von von der Wiedergabeeinheit (4, 6) wiedergegebenen Informationen an die Endbenutzergeräte (12) übertragen werden, um den Betrieb wenigstens eines Endbenutzergerätes (12) zu steuern,
- Informationen in Abhängigkeit von von dem Rechnersystem erhaltenen Signalen mittels Wiedergabeeinrichtungen der Endbenutzergeräte (12) wiedergegeben werden,
- Daten in das wenigstens eine gesteuerte Endbenutzergerät (12) in Antwort auf die mittels der Wiedergabeeinheit (4, 6) und/oder der Wiedergabeeinrichtung dieses Endbenutzergerätes (12) wiedergegebenen Informationen eingegeben werden,
- Daten in Abhängigkeit von den von dem Rechnersystem erhaltenen Signalen und/oder in Abhängigkeit von den eingegebenen Daten in dem wenigstens einen gesteuerten Endbenutzergerät gespeichert, werden und
- die gespeicherten Daten wenigstens teilweise zu dem Rechnersystem in Antwort auf die von dem lokalen Rechnersystem (2) erhaltenen Signale übertragen werden,
- die das wenigstens eine gesteuerte Endbenutzergerät (12) kennzeichnenden Daten von diesem zu dem Rechnersystem in Antwort auf die von dem lokalen Rechnersystem (2) erhaltenen Signale übertragen werden.

15. Verfahren nach Anspruch 14, mit den Schritten:
- Verbinden oder Koppeln eines der Endbenutzergeräte (12) mit einer Schnittstelleneinheit (14) des lokalen Rechnersystems (2) zur Datenübertragung, und
- Übertragen von Daten des mit der Schnittstelleneinheit (14) verbundenen oder gekoppelten Endbenutzergerätes (12) zu dem lokalen Rechnersystem.

16. Verfahren nach einem der Ansprüche 14 bis 15, mit dem Schritt: Übertragen von zur Wiedergabe mittels der Wiedergabeeinheit (4, 6) vorgesehenen Informationen von einem zentralen Rechnersystem (20) über ein Netzwerk (18) zu dem lokalen Rechnersystem (2).

17. Verfahren nach einem der Ansprüche 14 bis 16, mit dem Schritt: Speichern von Daten in einer Datenbasis, wobei die Daten mittels der Wiedergabeeinheit (4, 6) wiederzugebende Informationen, benutzerbezogene, die einzelnen Benutzer der Endbenutzergeräte (12) betreffende Daten und/oder Daten zur Steuerung von Signalübertragungen von und zu dem lokalen Rechnersystem wiedergeben.

18. Verfahren nach einem der Ansprüche 14 bis 17, mit dem Schritt: Übertragen der drahtlosen Signale zwischen dem lokalen Rechnersystem (2) und den Endbenutzergeräten (12) bei einer vorbestimmten Frequenz.

19. Verfahren nach einem der Ansprüche 14 bis 18, mit den Schritten:
- Übertragen von Daten in Abhängigkeit von von einem der Endbenutzergeräte (12) erhaltenen Daten von dem lokalen Rechnersystem (2) zu wenigstens einem anderen System (26, 28, 30), und
- Bereitstellen von Daten und/oder Informationen zu dem Benutzer des Endbenutzergerätes (12) in Abhängigkeit von den von dem lokalen Rechnersystem (2) erhaltenen Daten durch das wenigstens eine andere System (26, 28, 30) unabhängig von dem Endbenutzergerät (12).

20. Verfahren nach einem der Ansprüche 14 bis 19, mit den Schritten:
- Übertragen von Daten in Abhängigkeit von von einem der Endbenutzergeräte (12) erhaltenen Daten von dem lokalen Rechnersystem (2) zu dem zentralen Rechnersystem (20), und
- Betreiben des zentralen Rechnersystems (20) in Antwort und in Abhängigkeit von den von dem lokalen Rechnersystem (2) erhaltenen Daten als ein dem Benutzer des Endbenutzergerätes (12) zugeordnetes Rechnersystem.

21. Verfahren nach einem der Ansprüche 14 bis 20, mit den Schritten:
- Übertragen von Daten, die mittels der Wiedergabeeinheit (4, 6) wiederzugebende Informationen angeben, von einem Rechnersystem eines das lokale Rechnersystem (2) und/oder das zentrale Rechnersystem (20) in Anspruch nehmenden Betreibers, und
- Wiedergeben der durch die von dem Rechnersystembetreiber erhaltenen Daten charakterisierten Informationen mittels der Wiedergabeeinheit (4, 6).

22. Softwareprogrammprodukt, mit Programmcodeteilen zur Ausführung aller Verfahrensschritte nach einem der Ansprüche 14 bis 21, bei Ausführung auf einem Computer.

23. Softwareprogrammprodukt nach Anspruch 22, das auf einem computerlesbaren Speichermedium oder in einer mit einem Computer betreibbaren Speichervorrichtung gespeichert ist.

## Claims

1. System for interactive communication, comprising:
- a local processor system (2) connected with a transmission unit (8) and a receiver unit (10) for wireless signal transmission,
- a reproduction unit (4, 6) for the reproduction of information, and
- a plurality of end-user devices (12) which respectively include a transmission and receiver unit for wireless signal transmission from and to the local processor system (2), wherein
- the local processor system (2) is designed and programmed to transmit signals in dependence upon information reproduced with the reproduction unit (4, 6) to control the operation of at least one end-user device (12), wherein
- the transmission unit (8) is a single-channel transmitter which, at an event, is adapted to emit signals that are to be simultaneously received from a number of end-user devices (12) equipped with receiver devices,
- each end-user device (12) comprises reproduction means for the reproduction of information in dependence upon the signals received from the local processor system (2), and
- each end-user device (12) comprises an input means for the input of data by a user in response to the information reproduced by means of the reproduction means and/or the reproduction unit (4, 6),
- each end-user device (12) comprises storage means for storing in dependence upon the signals received from the local processor system (2) and/or in dependence upon the data inputted by the user, and
- each end-user device (12) is designed and programmed to transmit the stored data at least partially to the local processor system (2) in response to the signals received from the local processor system (2).

2. System according to claim 1, wherein the reproduction unit (4, 6) comprises a unit (4) for the reproduction of acoustic information and/or a unit (6) for the reproduction of visual information.

3. System according to one of the preceding claims, comprising:
- an interface unit (14) connected with the local processor system (2) for signal transmission to and from individual end-user devices (12) arranged adjacent to the interface unit (14) and/or connected with the interface unit (14), wherein
- the local processor system (2) is designed and programmed to transmit signals to these end-user devices (12) using the interface unit (14), to control these end-user devices (12) for the transmission of stored data to the interface unit (14).

4. System according to one of the preceding claims, comprising:
- a central processor system (20), and
- a network (18) for data transmission between the central processor system (20) and the local processor system (2), wherein
- the central processor system (20) is designed and programmed to transmit information for reproduction by means of the reproduction unit (4, 6) to the local processor system (2).

5. System according to one of the preceding claims, comprising at least one database (16, 22) for the storage of information to be reproduced by means of the reproduction unit (4, 6), user-related data concerning the individual users of the end-user devices (12) and data for the control of signal transmission from and to the local processor system (2).

6. System according to claim 5, wherein one of the at least one database (16, 22) is assigned to the local processor system (2) and/or to the central processor system (20).

7. System according to one of the preceding claims, wherein the local processor system (2) and the end-user devices (12) are designed and programmed to transmit signals for wireless signal transmission at a predetermined frequency.

8. System according to one of the preceding claims, wherein the local processor system (2) is designed and programmed to transmit data, in dependence upon data received from one of the end-user devices (12), to at least one other system (26, 28, 30), which provides data and/or information in dependence upon the data received from the local processor system (2) to the user of the end-user device (12) independently of the end-user device (12).

9. System according to one of the claims 4 to 8, wherein
- the local processor system (2) is equipped and programmed to transmit data to the central processor system (20) in dependence upon data received from one of the end-user devices (12), and
- the central processor system (20) is equipped and programmed to operate as a processor system assigned to the user of the end-user device (12) in response to and in dependence upon the data received from the local processor system (2).

10. System according to one of the preceding claims, wherein the local processor system (2) is equipped and programmed to reproduce information by means of the reproduction unit (4, 6) in dependence upon data that was transmitted from a processor system (24) of an operator using the system.

11. System according to claim 10, to the extent that claim 10 is dependent upon the claims 4 to 9, wherein the local processor system (2) receives data from the central processor system (20) which characterize the data of the processor system of the processor system operator using the system.

12. End-user device (12) equipped and/or programmed for the system according to one of the claims 1 to 11, comprising:
- a transmission and receiver unit for the wireless signal transmission from and to a local processor system (2), wherein
- the operation of each end-user device (12) is controlled by information transmitted from the local processor system (2),
- each end-user device (12) comprises reproduction means for the reproduction of information in dependence upon signals received from the local processor system (2),
- each end-user device (12) comprises an input means for the input of data by a user in response to information reproduced by the reproduction means and/or the reproduction unit (4, 6),
- each end-user device (12) comprises storage means to store in dependence upon the signals received from the local processor system (2) and/or in dependence upon the data inputted by the user, and
- each end-user device (12) is designed and programmed to transmit the stored data at least partly to the local processor system (2) in response to signals received from the local processor system (2).

13. Processor system equipped and/or programmed for use as local processor system (2) and/or central processor system (20) for the system according to one of the claims 1 to 11, which is connected with a transmission unit (8) and a receiver unit (10) for wireless signal transmission, and which:
- is connected with a reproduction unit (4, 6) for the reproduction of information, and which is designed and programmed to transmit signals in dependence upon information reproduced by the reproduction unit (4, 6) to a number of end-user devices (12) to control the operation of at least one end-user device (12), wherein
- the transmission unit (8) is a single-channel transmitter, which is equipped to emit signals generated by the processor system at an event, which signals are to be simultaneously received by end-user devices (12) that are equipped with receiver devices,
- on the basis of signals generated and emitted by the processor system (2), information is displayed on reproduction means of each end-user device (12),
- on the basis of signals generated and emitted by the processor system (2) as well as data, which by means of an input unit of each end-user device (12) by a user in reply to the information reproduced by means of the reproduction means and/or the reproduction unit (4, 6) are stored in storage means of each end-user device, and
- the processor system at least partly receives the stored data transmitted from each end-user device (12) in response to the signals emitted by the processor system.

14. Method of interactive communication, comprising the following steps:
- reproduction of information by means of a reproduction unit (4, 6) of a large event under control of a local processor system (2),
- transmission of wireless signals from a transmission unit (8), which is a single-channel transmitter, of the local processor system (2) to receiver units of a plurality of end-user devices (12), wherein
- during transmission of the wireless signals, signals in dependence upon information reproduced by the reproduction unit (4, 6) are transmitted to the end-user devices (12) to control the operation of at least one of the end-user devices (12),
- information is reproduced by reproduction means of the end-user devices (12) in dependence upon signals received from the processor system,
- data are inputted into the at least one controlled end-user device (12) in response to the information reproduced by means of the reproduction unit (4, 6) and/or the reproduction means of this end-user device (12),
- data are stored in the at least controlled end-user device in dependence upon the signals received from the processor system and/or in dependence upon the inputted data, and
- the saved data are at least partly transmitted to the processor system in response to the signals received from the local processor system (2),
- the data characterizing the at least one controlled end-user device (12) are transmitted therefrom to the processor system in response to the signals received from the local processor system (2).

15. Method according to claim 14, including the steps:
- connecting or coupling of one of the end-user devices (12) with an interface unit (14) of the local processor system (2) for data transmission, and
- transmission of data of the end-user device (12) connected or coupled with the interface unit (14) to the local processor system.

16. Method according to one of the claims 14 to 15, including the step: transmission of information provided for reproduction by means of the reproduction unit (4, 6) from a central processor system (20) to a local processor system (2) via a network (18).

17. Method according to one of the claims 14 to 16, including the step: storing of data in a database, wherein the data reproduce information to be reproduced by means of the reproduction unit (4, 6), user-related data concerning the individual users of the end-user devices (12) and/or data for the control of signal transmission from and to the local processor system.

18. Method according to one of the claims 14 to 17, including the step: transmission of the wireless signals between the local processor system (2) and the end-user devices (12) at a predetermined frequency.

19. Method according to one of the claims 14 to 18, including the steps:
- transmission of data from the local processor system (2) to at least one other system (26, 28, 30) in dependence upon data received from an end-user device (12), and
- provision of data and/or information to the user of the end-user device (12) in dependence upon the data received from the local processor system (2) via the at least one other system (26, 28, 30) independently of the end-user device (12).

20. Method according to one of the claims 14 to 19, including the steps:
- transmission of data from the local processor system (2) to the central processor system (20) in dependence upon data received from one of the end-user devices (12), and
- operation of the central processor system (20) as a processor system associated with the user of the end-user device (12) in response to and in dependence upon the data received from the local processor system (2).

21. Method according to one of the claims 14 to 20, including the steps:
- transmission of data, which specifies information to be reproduced by means of the reproduction unit (4, 6), from a processor system of an operator using the local processor system (2) and/or the central processor system (20), and
- reproduction of the information **characterized by** the data received from the processor system operator by means of the reproduction unit (4, 6).

22. Software program product comprising program code parts for the execution of all method steps according to one of the claims 14 to 21, by execution on a computer.

23. Software program product according to claim 22, which is stored on a computer-readable storage medium or in a storage device operable with a computer.

## Revendications

1. Système conçu pour une communication interactive, comprenant
- un système informatique local (2) connecté à une unité émettrice (8) et à une unité réceptrice (10) pour la transmission sans fil d'un signal,
- une unité de restitution (4, 6) pour la restitution d'informations, et
- plusieurs terminaux utilisateurs (12) présentant chacun une unité émettrice et une unité réceptrice pour la transmission sans fil d'un signal depuis et vers ledit système informatique local (2),
- le système informatique local (12) étant conçu et programmé pour émettre, en fonction des informations restituées par l'unité de restitution (4, 6), des signaux aux terminaux utilisateurs (12) afin de gérer le fonctionnement d'au moins un terminal utilisateur (12),
- l'unité émettrice (8) étant un émetteur monocanal aménagé pour émettre en rapport avec un événement des signaux qui seront simultanément reçus par plusieurs terminaux utilisateurs (12) équipés de récepteurs,
- chaque terminal utilisateur (12) présentant des dispositifs de restitution servant à restituer des informations en fonction des signaux reçus par le système informatique local (2),
- chaque terminal utilisateur (12) présentant un dispositif de saisie servant à saisir des données entrées par un utilisateur en réponse aux informations restituées par les dispositifs de restitution et/ou par l'unité de restitution (4, 6),
- chaque terminal utilisateur (12) présentant des dispositifs d'enregistrement pour enregistrer des données en fonction des signaux reçus par le système informatique local (2) et/ou en fonction des données entrées par l'utilisateur, et
- chaque terminal utilisateur (12) étant conçu et programmé pour transmettre au système informatique local (2) au moins pour partie les données enregistrées, en réponse aux signaux reçus par le système informatique local (2).

2. Système selon la revendication 1, dans le cadre duquel l'unité de restitution (4, 6) comprend une unité (4) servant à restituer des informations acoustiques et/ou une unité (6) servant à restituer des informations visuelles.

3. Système selon l'une des revendications précédentes, comprenant :
- une unité d'interface (14) connectée au système informatique local (2) pour la transmission de signaux vers et depuis différents terminaux utilisateurs (12) disposés dans le voisinage de ladite unité d'interface (14) et/ou connectés à ladite unité d'interface (14),
- le système informatique local (2) étant conçu et programmé pour transmettre aux terminaux utilisateurs (12) des signaux via l'unité d'interface (14) afin d'ordonner auxdits terminaux utilisateurs (12) de transmettre des données enregistrées à l'unité d'interface (14).

4. Système selon l'une des revendications précédentes, comprenant :
- un système informatique central (20) et
- un réseau (18) destiné à la transmission de données entre le système informatique central (20) et le système informatique local (2),
- le système informatique central (20) étant conçu et programmé pour transmettre au système informatique local (2) des informations destinées à être restituées par l'unité de restitution (4, 6).

5. Système selon l'une des revendications précédentes, comprenant au moins une base de données (16, 22) pour l'enregistrement des informations destinées à être restituées par l'unité de restitution (4, 6) et des données concernant les différents utilisateurs des terminaux utilisateurs (12) ainsi que des données servant à gérer la transmission de signaux depuis et vers le système informatique local (2).

6. Système selon la revendication 5, dans le cadre duquel ladite base de données (16, 22) est associée au système informatique local (2) et/ou au système informatique central (20).

7. Système selon l'une des revendications précédentes, dans le cadre duquel le système informatique local (2) et les terminaux utilisateurs (12) sont conçus et programmés pour transmettre dans le cadre d'une transmission sans fil des signaux sur une fréquence prédéterminée.

8. Système selon l'une des revendications précédentes, dans le cadre duquel le système informatique local (2) est conçu et programmé pour transmettre, en fonction des données reçues par l'un des terminaux utilisateurs (12), des données à au moins un autre système (26, 28, 30), lequel tient à la disposition de l'utilisateur du terminal utilisateur (12), indépendamment dudit terminal utilisateur (12), des données et/ou des Informations en fonction des données reçues par le système informatique local (12).

9. Système selon l'une des revendications 4 à 8, dans le cadre duquel
- le système informatique local (2) est aménagé et programmé pour transmettre des données au système informatique central (20) en fonction des données reçues par l'un des terminaux utilisateurs (12), et
- le système informatique central (20) est aménagé et programmé pour fonctionner comme un système informatique associé à l'utilisateur du terminal utilisateur (12), en réponse et en fonction des données reçues par le système informatique local (2).

10. Système selon l'une des revendications précédentes, dans le cadre duquel le système informatique local (2) est aménagé et programmé pour restituer en fonction des données, à l'aide de l'unité de restitution (4, 6), des informations qui ont été transmises par le système informatique (24) d'un exploitant qui utilise le système.

11. Système selon la revendication 10, dans la mesure où la revendication 10 dépend des revendications 4 à 9, dans le cadre duquel le système informatique local (2) reçoit du système informatique central (20) des données qui caractérisent les données du système informatique de l'exploitant qui utilise le système.

12. Terminal utilisateur (12) aménagé et programmé pour le système selon l'une des revendications 1 à 11, comprenant :
- une unité émettrice et une unité réceptrice pour la transmission sans fil de signaux depuis et vers le système informatique local (2),
- le fonctionnement de chaque terminal utilisateur (12) étant géré par des informations émises par le système informatique local (2),
- chaque terminal utilisateur (12) présentant des dispositifs de restitution servant à restituer des informations en fonction des signaux reçus par le système informatique local (2),
- chaque terminal utilisateur (12) présentant un dispositif de saisie servant à saisir des données entrées par un utilisateur en réponse aux informations restituées par les dispositifs de restitution et/ou par l'unité de restitution (4, 6),
- chaque terminal utilisateur (12) présentant des dispositifs d'enregistrement pour enregistrer des données en fonction des signaux reçus par le système informatique local (2) et/ou en fonction des données entrées par l'utilisateur, et
- chaque terminal utilisateur (12) étant conçu et programmé pour transmettre au système informatique local (2) au moins pour partie les données enregistrées, en réponse aux signaux reçus par le système informatique local (2).

13. Système informatique aménagé et programmé pour servir de système informatique local (2) et/ou de système informatique central (20) pour le système selon l'une des revendications 1 à 11, lequel est connecté
- à une unité émettrice (8) et à une unité réceptrice (10) pour la transmission sans fil de signaux, et
- à une unité de restitution (4, 6) servant à restituer des informations, et est aménagé et programmé pour émettre, en fonction des informations restituées par l'unité de restitution (4, 6), des signaux à plusieurs terminaux utilisateurs (12) afin de gérer le fonctionnement d'au moins un terminal utilisateur (12),
- l'unité émettrice (8) étant un émetteur monocanal aménagé pour émettre des signaux produits par le système informatique en rapport avec un événement, lesquels signaux seront simultanément reçus par plusieurs terminaux utilisateurs (12) équipés de récepteurs,
- des informations étant sorties sur les dispositifs de restitution de chaque terminal utilisateur (12) suite aux signaux produits et émis par le système informatique (2),
- des informations étant enregistrées dans les dispositifs d'enregistrement de chaque terminal utilisateur suite aux signaux produits et émis par le système informatique (2) ainsi qu'aux données entrées par l'utilisateur à l'aide du dispositif de saisie de chaque terminal utilisateur (12), en réponse aux informations restituées par les dispositifs de restitution et/ou par l'unité de restitution (4, 6).
- le système informatique de chaque terminal utilisateur (12) recevant par transmission au moins en partie les données enregistrées, en réponse aux signaux émis par le système informatique.

14. Procédé conçu pour une communication interactive, comprenant les étapes suivantes :
- restitution d'informations à l'aide d'une unité de restitution (4, 6) utilisée dans le cadre d'une grande manifestation et gérée par un système informatique local (2),
- transmission sans fil de signaux depuis l'unité émettrice (8), qui se compose d'un émetteur monocanal et dont est équipée le système informatique (2), vers les unités réceptrices de plusieurs terminaux utilisateurs (12),
- des signaux étant, dans le cadre d'une transmission sans fil de signaux, transmis aux terminaux utilisateurs (12) en fonction des informations restituées par l'unité de restitution (4, 6) afin de gérer le fonctionnement d'au moins un terminal utilisateur (12)
- des informations étant restituées par les dispositifs de restitution des terminaux utilisateurs (12) en fonction des signaux reçus par le système informatique,
- des données étant entrées dans ledit terminal utilisateur (12) géré, en réponse aux informations restituées par l'unité de restitution (4, 6) et/ou par le dispositif de restitution dudit terminal utilisateur (12),
- des données étant enregistrées dans ledit terminal utilisateur géré, en fonction des signaux reçus par le système informatique et/ou en fonction des données entrées, et
- les données enregistrées étant transmises au moins pour partie au système informatique en réponse aux signaux reçus par le système informatique local (2),
- les données qui caractérisent ledit terminal utilisateur géré (12) étant transmises par ce dernier au système informatique en réponse aux signaux reçus par le système informatique local (2).

15. Procédé selon la revendication 14, comprenant les étapes suivantes :
- connexion ou couplage d'un des terminaux utilisateurs (12) à une unité d'interface (14) du système informatique local (2) pour la transmission de données, et
- transmission au système informatique local de données depuis le terminal utilisateur (12) connecté ou couplé à l'unité d'interface (14).

16. Procédé selon l'une des revendications 14 à 15, comprenant pour étape : transmission d'informations destinées à être restituées à l'aide de l'unité de restitution (4, 6) par un système informatique central (20) au système informatique local (2) via un réseau (18).

17. Procédé selon l'une des revendications 14 à 16, comprenant pour étape : l'enregistrement de données dans une base de données, les données représentant des informations destinées à être restituées par l'unité de restitution (4, 6) ainsi que des données concernant les différents utilisateurs des terminaux utilisateurs (12) et/ou des données destinées à gérer la transmission de signaux depuis et vers le système informatique local.

18. Procédé selon l'une des revendications 14 à 17, comprenant pour étape : transmission sans fil des signaux entre le système informatique local (2) et les terminaux utilisateurs (12) sur une fréquence prédéterminée.

19. Procédé selon l'une des revendications 14 à 18, comprenant pour étapes :
- transmission de données par le système informatique local (2) à au moins un autre système (26, 28, 30), en fonction des données reçues par l'un des terminaux utilisateurs (12), et
- maintien par ledit autre système (26, 28, 30) de données et/ou d'informations à la disposition de l'utilisateur du terminal utilisateur (12), indépendamment du terminal utilisateur (12), en fonction des données reçues par le système informatique local (12).

20. Procédé selon l'une des revendications 14 à 19, comprenant pour étapes :
- transmission de données par le système informatique local (2) au système informatique central (20) en fonction des donnée reçues par l'un des terminaux utilisateurs (12), et
- fonctionnement du système informatique central (20) comme système informatique associé à l'utilisateur du terminal utilisateur (12), en réponse et en fonction des données reçues par le système informatique local (2).

21. Procédé selon l'une des revendications 14 à 20, comprenant pour étapes :
- transmission des données représentant des informations destinées à être restituées par l'unité de restitution (4, 6) depuis un système informatique d'un exploitant utilisant le système informatique local (2) et/ou le système informatique central (20), et
- restitution à l'aide de l'unité de restitution (4, 6) des informations **caractérisées par** les données reçues par l'exploitant du système informatique.

22. Programme logiciel comprenant des composantes de code logiciel pour l'exécution sur un ordinateur de toutes les étapes du procédé selon l'une des revendications 14 à 21.

23. Programme logiciel selon la revendication 22, lequel est enregistré sur un support d'enregistrement lisible par ordinateur ou dans un dispositif d'enregistrement exploitable par ordinateur.
